**Europäisches Patentamt**

**European Patent Office**

**Office européen des brevets**

(19)

(11) Numéro de publication: **0 128 789**

**B1**

(12)

# FASCICULE DE BREVET EUROPÉEN

(45) Date de publication du fascicule du brevet:
14.10.87

(51) Int. Cl.⁴: **H 04 N 5/262**

(21) Numéro de dépôt: **84400936.5**

(22) Date de dépôt: **09.05.84**

(54) **Procédé pour réaliser une transformation géométrique sur une image vidéo, et dispositifs mettant en oeuvre ce procédé.**

(30) Priorité: **11.05.83 FR 8307904**

(43) Date de publication de la demande:
**19.12.84 Bulletin 84/51**

(45) Mention de la délivrance du brevet:
**14.10.87 Bulletin 87/42**

(84) Etats contractants désignés:
**DE GB**

(56) Documents cité:
**WO-A-81/02939**
**FR-A-2 275 093**
**US-A-4 011 401**
**US-A-4 266 242**

(73) Titulaire: **THOMSON- CSF, 173, Boulevard Haussmann, F-75379 Paris Cédex 08 (FR)**

(72) Inventeur: **Chapuis, Franck, THOMSON- CSF SCPI 173, bld Haussmann, F-75379 Paris Cedex 08 (FR)**
Inventeur: **Oyaux, Jacques, THOMSON- CSF SCPI 173, bld Haussmann, F-75379 Paris Cedex 08 (FR)**
Inventeur: **Nguyen, Xuan Kiet, THOMSON- CSF SCPI 173, bld Haussmann, F-75379 Paris Cedex 08 (FR)**

(74) Mandataire: **Turlèque, Clotilde, THOMSON- CSF SCPI 19, avenue de Messine, F-75008 Paris (FR)**

## Description

L'invention concerne les effets spéciaux réalisés sur les images vidéo. Une transformation géométrique peut être une translation, une affinité, une rotation ou un effet de perspective, éventuellement combines.

Une telle transformation peut être appliquée à une image vidéo quelconque, analysée par une caméra, mais elle peut être appliquée aussi à une image générée électroniquement. Il existe, en effet, des dispositifs appelés générateurs de fonds d'image, qui génèrent un signal vidéo correspondant à une image comportant, par exemple, des rectangles colorés sur lesquels sont inscrits un générique, et il existe aussi des dispositifs appelés générateurs de formes électronique qui, en étant associés à un dispositif appelé commutateur à gain variable, permettent de combiner deux signaux vidéo afin d'obtenir une image dont certaines parties sont fournies par l'un des signaux vidéo, et dont les autres parties sont fournies par l'autre signal vidéo. Par exemple un générateur de formes associé à un commutateur à gain variable permet de réaliser une image comportant un fond, fourni par un premier signal video, et comportant un médaillon, à bordures floues, fourni par un second signal vidéo. Il est souhaitable de pouvoir réaliser des formes très diverses, variables au gré de l'utilisateur.

Il est connu de réaliser une compression ou une expansion, verticale ou horizontale, d'une image vidéo quelconque par un procédé numerique. Par exemple, pour réaliser une compression verticale le signal vidéo est échantillonné à la fréquence d'échantillonnage standard, 13,5 MHz, puis certains échantillons sont abandonnés, et les valeurs des échantillons restants sont inscrites dans une mémoire tampon de capacité égale à une image. Les valeurs d'adresse d'écriture dans la mémoire tampon sont incrémentées a une vitesse moyenne plus lente que la fréquence d'échantillonnage. Lorsque le taux de compression n'est pas égal à une valeur entière les valeurs numériques inscrites dans la mémoire tampon sont déterminées par une interpolation. La mémoire tampon est lue ensuite en incrémentant les valeurs d'adresse de lecture à une vitesse correspondant à la fréquence d'échantillonnage standard.

La réalisation d'une rotation est décrite dans le brevet US 4 011 401, mais elle nécessite des calculs plus complexes, qui la rendent difficile à réaliser en temps réel. Ce brevet décrit un dispositif comportant: une caméra munie d'un capteur d'image à transfert de charges, qui est utilisé comme une mémoire dimage à accès aléatoire. Deux décodeurs d'adresses réalisent l'adressage d'un élément d'image, dont la luminance est stockée dans le capteur, à partir d'une adresse verticale Y et d'une adresse horizontale X fournies par des additionneurs et des multiplicateurs réalisant, pour chaque point, un calcul de la forme:

$$\begin{bmatrix} X \\ Y \end{bmatrix} = \begin{bmatrix} \cos R, -\sin R \\ \sin R, \cos R \end{bmatrix} \times \begin{bmatrix} H \\ V \end{bmatrix}$$

où R est l'angle de rotation, et où H et V sont les coordonnées d'un point de l'image transformée, les valeurs de ces coordonnées H et V étant fournies dans un ordre croissant par deux compteurs. La réalisation de ces calculs sur deux nombres de 9 bits est trop longue pour permettre de réaliser des rotations en temps réel par ce procédé.

Le document WO 81/02939 décrit un système permettant de réaliser des transformations multidimensionnelles sur une image vidéo, notamment une rotation ou une projection en perspective. Ce système comporte en série: une première mémoire de transposition procurant un changement de direction de balayage d'une direction horizontale à une direction verticale; un dispositif de transformation verticale; une seconde mémoire de transposition, stockant des informations vidéo transformées verticalement, et procurant un changement de direction de balayage d'une direction verticale à une direction horizontale; et un dispositif de transformation horizontale fournissant un signal représentant une image transformée. Ce système a pour inconvénient de comporter beaucoup de matériel, et donc d'être très coûteux.

Il est connu aussi de réaliser des transformations géométriques simples, au moyen d'un dispositif appelé générateur de formes électronique associé à un commutateur à gain variable. Pour élaborer les signaux de commade du commutateur, les générateurs de formes électronique, classiques, comprennent des générateurs de signaux en dents de scie, et des générateurs de signaux paraboliques. Ces générateurs de signaux peuvent être analogiques ou numériques. Les générateurs analogiques sont peu stables dans le temps, à cause des variations de température, des tolérances des composants, du vieillissement, etc. Les générateurs numériques sont exempts du problème de stabilité des réglages et sont plus simples à mettre au point. Cependant les formes obtenues sont simples, et surtout les transformations géométriques réalisables sont peu nombreuses. Par exemple, il est connu de réaliser une rotation dun carré, mais pas d'un losange ou d'une étoile. Il est connu de réaliser des bordures floues ou des bordures colorées, une translation, ou une multiplication des motifs, mais sans pouvoir réaliser simultanément une rotation.

Le procédé selon l'invention permet de remédier aux inconvénients des générateurs de formes électronique et des systèmes de transformation, de types connus. Il permet de réaliser soit une translation, soit une rotation, soit une affinité, soit une combinaison de ces transformations élémentaires, et permet en outre de réaliser une projection permettant d'avoir un effet de perspective, avec une simplicité de calcul suffisante pour permettre une mise en oeuvre en temps réel.

Un premier objet de l'invention est un procédé pour réaliser une transformation géométrique sur une image vidéo, dite image initiale, consistant à:

- repérer chaque point de l'image initiale par des coordonnées dans un repère cartésien, dit repère mobile, lié à cette image initiale;

- à représenter chaque point de l'image initiale par un mot binaire;

- à stocker l'image initiale dans un disposif de stockage, ayant deux entrées d'adresses de lecture et une sortie de données, et fournissant un mot binaire correspondant au point de coordomées (X, Y, 0) dans l'image initiale, lorsque des valeurs d'adresses de lecture, X et Y, sont appliquées respectivement sur les deux entrées;

- à repérer chaque point de l'image transformée de l'image initiale, par des coordonnées dans un repère cartésien $(0X_2, 0Y_3, 0Z_3)$ lié à cette image transformée et dit repère fixe, l'unité sur chaque axe du repère fixe et du repère mobile correspondant à un élément d'image;

- à représenter chaque point de l'image transformée, par un mot binaire M fourni par le dispositif de stockage en appliquant à ses entrées d'adresses de lecture des valeurs de X et Y calculées en fonction des coordonnées $(X_3, Y_3, 0)$ de ce point et en fonction des paramètres de la transformation géométrique; celle-ci étant composée: d'une affinité dont les coefficients sont $(A_x, A_y)$; d'une rotation dun agle $\alpha$, effectuées dans le plan de l'image initiale; d'une projection en perspective sur le plan de l'image transformée, projection dont la direction de vue fait un angle $\beta$ avec l'axe $0_3X_3$ et un angle $\gamma$ avec l'axe $0_3Z_3$ et dont le point de fuite est situé à une distance $\rho_{PF}$ de l'origine du repère fixe, cette origine étant le premier point de la première ligne de l'image transformée; et d'une translation $(X_{03}, Y_{03})$ dans le plan de l'image transformée;

est caractérisé en ce que:

- pour chaque point de coordonnées $(X_3 > 0, Y_3 > 0, 0)$ de l'image transformée les adresses de lecture sont calculées, en fonction de celles calculées pour le point immédiatement précédent dans l'image transformée, selon les formules:

$$X(X_3, Y_3) = X(X_3 - 1, Y_3) + k.D_{xx}$$
$$Y(X_3, Y_3) = Y(X_3 - 1, Y_3) + k.D_{yx} \tag{15}$$

- pour chaque point de coordonnées $(X_3 = 0, Y_3 > 0, 0)$ situé au début d'une ligne de l'image transformée, les valeurs des adresses de lecture sont initialisées par les valeurs:

$$X(0, Y_3) = X(0, Y_3 - 1) + k.D_{xy}$$
$$Y(0, Y_3) = Y(0, Y_3 - 1) + k.D_{yy} \tag{16}$$

$X(0, Y_3 - 1)$, $Y(0, Y_3 - 1)$ étant les valeurs d'adresses de lecture calculées pour le premier point de la ligne immédiatement précédente dans l'image transformée;

- pour le premier point de l'image transformée $(X_3 = 0, Y_3 = 0)$ les valeurs des adresses de lecture sont initialisées par les valeurs:

$$X(0, 0) = -k.D_{xx}.X_{03} - k.D_{xy}.Y_{03}$$
$$Y(0, 0) = -k.D_{yx}.X_{03} - k.D_{yy}.Y_{03} \tag{17}$$

avec:

$$\left. \begin{array}{l} k = 1 - k_x (X_3 - X_{03}) + k_y (Y_3 - Y_{03}) \\[6pt] D_{xx} = \dfrac{\cos\alpha\cos\beta\cos\gamma + \sin\alpha\sin\beta}{A_x} \\[6pt] D_{xy} = \dfrac{\cos\alpha\sin\beta\cos\gamma + \sin\alpha\cos\beta}{A_x} \\[6pt] D_{yx} = \dfrac{\sin\alpha\cos\beta\cos\gamma + \cos\alpha\sin\beta}{A_y} \\[6pt] D_{yy} = \dfrac{\sin\alpha\sin\beta\cos\gamma + \cos\alpha\cos\beta}{A_y} \\[6pt] k_x = \dfrac{\cos\beta\sin\gamma}{\rho_{PF}} \\[6pt] k_y = \dfrac{\sin\beta\cos\gamma}{\rho_{PF}} \end{array} \right\} \tag{18}$$

Un second objet de l'invention est un dispositif mettant en oeuvre ce procédé sur une image vidéo quelconque.

Un troisième objet de l'invention est un dispositif générateur de formes électronique mettant en oeuvre le procédé selon l'invention.

L'invention sera mieux comprise et d'autres détails apparaîtront à l'aide de la description ci-dessous et des figures l'accompagnant:

- les figures 1 à 6 et 8 à 17, illustrent le procédé selon l'invention;

- la figure 7 représente le schéma synoptique d'un exemple de réalisation d'un dispositif pour réaliser une transformation géométrique sur une image vidéo quelconque;

- la figure 18 représente le schéma synoptique d'un exemple de réalisation d'un dispositif générateur de formes;

- les figures 19 et 20 représentent deux variantes d'une partie de ce dernier dispositif.

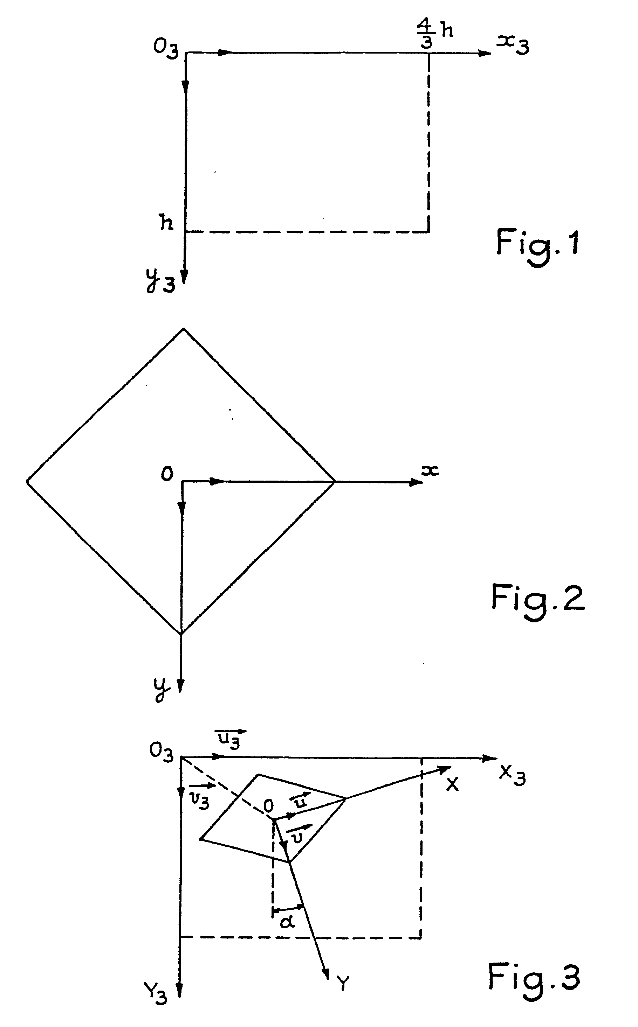

Sur la figure 1 est représenté un repère cartésien $(0_3, x_3, y_3)$, dit repère fixe car il est lié à l'image transformée que l'on souhaite obtenir sur un écran vidéo. Dans une première étape les coordonnées $x_3$ et $y_3$ ont pour unité une unité de longueur, par exemple le millimètre. Une image de télévision ayant une longueur égale à $\frac{4}{3}$ de sa largeur des pointillés délimitent, avec les axes, les bords d'une image de largeur h et de longueur $\frac{4}{3}$ h. Seule sera visible la partie de l'image transformée qui sera située dans ce rectangle.

La figure 2 représente un exemple d'image initiale, qui est constituée par un carré. Les points de cette image initiale sont repérés dans un repère cartésien (0, x, y). Dans une première étape les unités considérées sur ces axes sont des unités de longueur, par exemple le millimètre. Dans cet exemple, l'origine 0 du repère est située au centre du carré et les axes sont confondus avec les diagonales du carré.

La figure 3 représente l'image transformée de l'image initiale par une transformation composée d'une rotation d'angle $\alpha$ autour de l'origine 0 du repère mobile, d'une affinite de rapport $A_x$ dans la direction de l'axe

$$\overrightarrow{0x},$$

et de rapport $A_y$ dans la direction de l'axe

$$\overrightarrow{0y},$$

et d'une translation définie par le vecteur

$$\overrightarrow{0_3 0}$$

reliant les origines des deux repères. Les coordonnées $(x_3, y_3)$ et $(x, y)$ sont liées par la relation suivante:

$$\begin{bmatrix} x_3 \\ y_3 \end{bmatrix} = \begin{bmatrix} A_x \\ A_y \end{bmatrix} \times \begin{bmatrix} \cos\alpha, -\sin\alpha \\ \sin\alpha, \cos\alpha \end{bmatrix} \times \begin{bmatrix} x \\ y \end{bmatrix} + \begin{bmatrix} x_{03} \\ y_{03} \end{bmatrix} \qquad (1)$$

$(x_{03}, y_{03})$ sont les coordonnées de l'origine $0_3$ dans le repère mobile défini précédemment. La relation inverse de celle-ci permet de déterminer les coordonnées (x, y) d'un point de l'image initiale correspondant à un point de coordonnées $(x_3, y_3)$ de l'image transformée:

$$x = \frac{\cos\alpha}{A_x}(x_3 - x_{03}) + \frac{\sin\alpha}{A_x}(y_3 - y_{03})$$

$$y = \frac{\sin\alpha}{A_y}(x_3 - x_{03}) + \frac{\cos\alpha}{A_y}(y_3 - y_{03}) \qquad (2)$$

En pratique le repérage des points de l'image initiale et de l'image transformée n'est pas fait par rapport à une unité de longueur, mais par rapport au pas d'une grille, puisqu'une image de télevision numerique est considérée comme constituée d'éléments rectangulaires discontinus, appelés généralement points. Par exemple une image de télévision peut être constituée de 720 points par ligne, et comporter 576 lignes par image.

Dans cet exemple les unités de longueur dans le repère fixe sont alors:

$$u_3 = \frac{4}{3} \times \frac{h}{720}$$

$$v_3 = \frac{h}{576}$$

Les unités de longueur du repère mobile liées à l'image initiale sont modifiées de manière analogue. Les valeurs sont les mêmes que pour le repère fixe si l'image initiale est une image de télévision, quelconque, comportant 720 points par ligne, et 576 lignes par image. Si, par contre, l'image initiale est une image constituée de N points par ligne, et comporte M lignes par image, les unités sont alors:

$$u = \frac{4}{3} \times \frac{h}{N}$$

$$v = \frac{h}{M}$$

Après ces changements d'unités, les coordonnees dans le repère mobile et dans le repère fixe sont notées respectivement (X, Y) et $(X_3, Y_3)$. La relation (2) devient:

$$X = \frac{\cos\alpha}{A_x}(X_3 - X_{03}) \cdot \frac{u_3}{u} + \frac{\sin\alpha}{A_x}(Y_3 - Y_{03}) \cdot \frac{v_3}{v}$$

$$Y = -\frac{\sin\alpha}{A_y}(X_3 - Y_{03}) \cdot \frac{u_3}{u} + \frac{\cos\alpha}{A_y}(Y_3 - Y_{03}) \cdot \frac{v_3}{v} \tag{3}$$

$(X_{03}, Y_{03})$ sont les coordonnées de $0_3$ dans le repère mobile après les changements d'unités. La relation (3) peut s'écrire sous la forme:

$$\begin{bmatrix} X \\ Y \end{bmatrix} = \begin{bmatrix} I_{xx}, Y_{xy} \\ I_{yx}, I_{yy} \end{bmatrix} \begin{bmatrix} X_3 - X_{03} \\ Y_3 - Y_{03} \end{bmatrix} \tag{4}$$

où les coefficients $I_{xx}$, $I_{xy}$, $I_{yx}$, $I_{yy}$ sont des coefficients constants pour une transformation géométrique donnée.

Pour réaliser une transformation géométrique sur une image vidéo quelconque, fournie par exemple par une caméra de télévision, l'image initiale est stockée dans une mémoire d'image, en inscrivant à une adresse (X, Y) un mot binaire constitué par les valeurs numériques fournies par la numérisation du signal vidéo. Les valeurs de X et Y sont constituées respectivement par le rang du point considéré, sur sa ligne, et par le rang de sa ligne dans l'image initiale. Pour générer un signal vidéo correspondant à l'image transformée la mémoire d'image est lue à une adresse (X, Y) donnée par la relation (4), à l'instant où doit être reconstitué le signal vidéo correspondant au point de coordonnées $(X_3, Y_3)$ de l'image transformée. Les coordonnées $(X_3, Y_3)$ sont constituées par le rang de ce point sur sa ligne, et par le rang de sa ligne dans l'image transformée. Le calcul de la valeur de X et Y en fonction de celle de $X_3$ et $Y_3$ par la relation (4) est très long à réaliser puisqu'il comporte quatre multiplications. Le procédé selon l'invention détermine X et Y par une récurrence permettant de raccourcir beaucoup le temps de calcul. Il consiste à calculer une valeur de X et Y en fonction de la valeur calculée pour le point immédiatement précédent au cours du balayage de l'image transformée. Le passage d'un point de coordonnées $(X_3 -1, Y_3)$, au point suivant de coordonnées $(X_3, Y_3)$ se traduit, d'après la relation (4), par une variation de X égal à $I_{xx}$, et par une variation Y égale à $I_{yx}$:

$$X(X_3, Y_3) = X(X_3 -1, Y_3) + I_{xx}$$

$$Y(X_3, Y_3) = Y(X_3 - 1, Y_3) + I_{yx} \tag{5}$$

Pour chaque point de l'image transformée le calcul des valeurs d'adresse de lecture dans la mémoire d'image se réduit à ajouter un incrément constant $I_{xx}$ à la valeur de X calculée immédiatement précédemment, et à ajouter un incrément constant $I_{yx}$ à la valeur de Y calculée immédiatement précédemment.

Au début de chaque ligne de l'image tranformée la valeur de X et de Y est calculée par une relation qui n'est pas non plus la relation (4), mais une relation de récurrence qui en est déduite:

$$X(0, Y_3) = X(0, Y_3 -1) + I_{xy}$$

$$Y(0, Y_3) = Y(0, Y_3 - 1) + I_{yy} \tag{6}$$

Et pour le premier point de la première ligne de l'image transformée la relation (4) donne les valeurs suivantes:

$$X(0, 0) = -I_{xx} \cdot X_{03} - I_{xy} \cdot Y_{03}$$

$$Y(0, 0) = -I_{YX} \cdot X_{03} - I_{yy} \cdot Y_{03} \tag{7}$$

Le calcul des valeurs $X(0, 0)$ et $Y(0, 0)$ comporte quatre multiplications qui nécessitent un long temps de calcul, mais cela est sans importance car ce calcul n'a lieu qu'une fois par image et peut être fait pendant le temps séparant l'analyse de deux images.

Une transformation géométrique plus complexe peut être composée non seulement d'une rotation, d'une affinité, et d'une translation mais aussi d'une projection procurant un effet de perspective. Dans ce cas les points de l'image transformée sont repérés dans un repère cartésien $(0_3, X_3, Y_3, Z_3)$, le plan de l'écran vidéo où se forme l'image transformée étant le plan $(0_3, X_3, Y_3)$. Pour réaliser un effet de perspective chaque point de l'image initiale est projeté sur le plan $(0_3, X_3, Y_3)$ selon une droite passant par un point $P_F$, dit point de fuite.

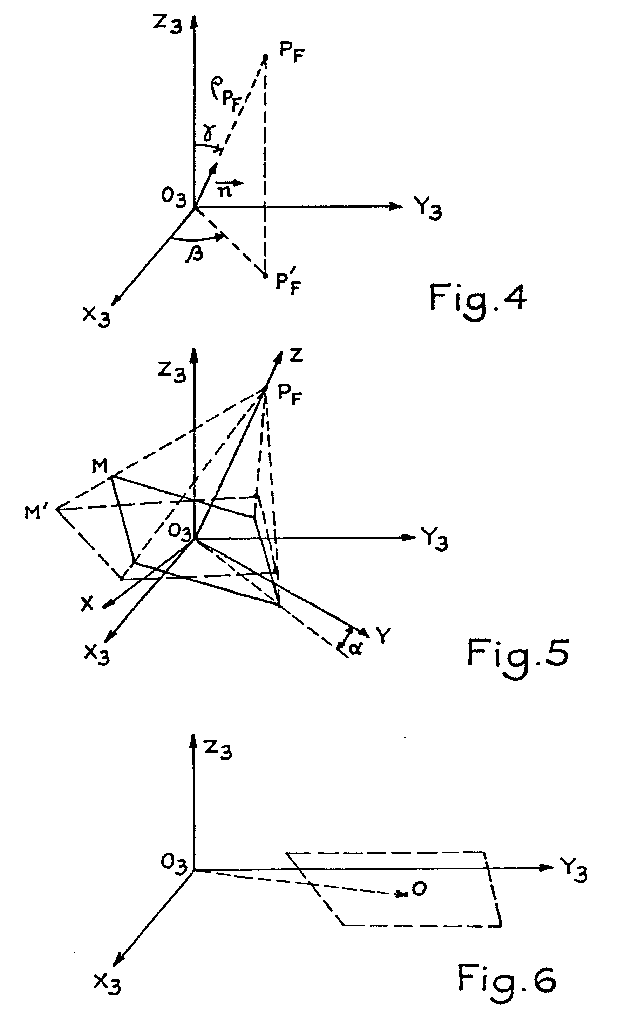

La figure 4 représente le point de fuite $P_F$ dans le repère $(0_3, X_3, Y_3, Z_3)$. Il a pour coordonnées sphériques:

$$(8) \quad \begin{cases} \mathcal{C}_{PF} \\ \\ \beta = (\overrightarrow{0_3 X_3}, \overrightarrow{0_3 P'_F}) \\ \\ \gamma = (\overrightarrow{0_3 Z_3}, \overrightarrow{0_3 P_F}) \end{cases}$$

tel que $\overrightarrow{0_3 P_F} = \mathcal{C}_{PF} \cdot \vec{n}$, où $\vec{n}$ est un vecteur unité

où $P'_F$ est la projection orthogonale de $P_F$ sur le plan $(0_3, X_3, Y_3)$

Les points de l'image initiale sont repérés dans un repère cartésien $(0_3, X, Y, Z)$, dit repère mobile, dont l'axe

$$\overrightarrow{0_3 Z}$$

passe par le point de fuite $P_F$, dans le sens

$$\overrightarrow{0_3 P_F}.$$

La figure 5 représente le repère fixe, le repère mobile, une figure géométrique en traits pleins, et une figure géométrique en pointillés. L'image initiale, qui n'est pas représentée sur cette figure, est constituée par un carré situé dans le plan $0_3 X Y$ et centré en $0_3$. Une rotation d'angle $\alpha$, autour de $0_3$ dans le plan $0_3 X Y$, et une affinité de coefficients $(A_x, A_y, 1)$ sont réalisées sur l'image initiale. La figure transformée obtenue par ces premières transformations est constituée par la figure représentée en traits pleins, qui est un losange dont les diagonales ont un décalage angulaire $\alpha$ par rapport aux axes $0_3 X$ et $0_3 Y$. Chaque point de l'image initiale, de coordonnées $(X, Y, Z)$ dans le repère mobile $0_3 X, 0_3 Y, 0_3 Z$, a pour transformé, dans ce même repère, un point de coordonnées $(X_2, Y_2, Z_2)$ données par les formules suivantes:

$$\begin{bmatrix} X_2 \\ Y_2 \\ Z_2 \end{bmatrix} = \begin{bmatrix} \cos\alpha & -\sin\alpha & 0 \\ \sin\alpha & -\cos\alpha & 1 \\ 0 & 0 & 1 \end{bmatrix} \begin{bmatrix} A_x & 0 & 0 \\ 0 & A_y & 0 \\ 0 & 0 & 1 \end{bmatrix} \begin{bmatrix} X \\ Y \\ Z \end{bmatrix} \quad (9)$$

Chaque point M, de coordonnées $(X_2, Y_2, Z_2)$ de ce losange est projeté en un point M', dans la direction $M P_F$, sur le plan $0_3 X_3 Y_3$, pour constituer une image transformée qui est représentée en pointillés sur la figure. Le centre du carré de l'image initiale, n'a pas été modifié par la rotation et l'affinité, et il n'est pas modifié par cette projection, il reste au point $0_3$. Il est à noter qu'une partie des points du losange sont projetés sur une première face du plan $0_3 X_3 Y_3$, et qu'une autre partie de ces points sont projetées sur l'autre face de ce plan. Le point M a pour coordonnées $(X_2, Y_2, 0)$ dans le repère mobile, et $(X_1, Y_1, Z_1)$ dans le repère fixe, qui sont reliées par la relation suivante:

$$\begin{bmatrix} X_1 \\ Y_1 \\ Z_1 \end{bmatrix} = \begin{bmatrix} \cos\beta \cdot \cos\gamma, & -\sin\beta, & \sin\gamma \cdot \cos\beta \\ \cos\gamma \cdot \sin\beta, & \cos\beta, & \sin\gamma \cdot \sin\beta \\ -\sin\gamma, & 0, & \cos\gamma \end{bmatrix} \begin{bmatrix} X_2 \\ Y_2 \\ 0 \end{bmatrix} \quad (10)$$

Le point M' étant la projection du point M dans la direction $MP_F$, les vecteurs

$$\overrightarrow{P_F M}$$

et

$$\overrightarrow{P_F M'}$$

sont colinéaires et sont liés par la relation suivante:

$$\overrightarrow{P_F M} = k \cdot \overrightarrow{P_F M'}$$

$$\overrightarrow{P_F O_3} + \overrightarrow{O_3 M} = k.(\overrightarrow{P_F O_3} + \overrightarrow{O_3 M'})$$

$$\text{donc } \overrightarrow{O_3 M'} = \frac{1}{k} \cdot \overrightarrow{O_3 M} - \frac{(1-k)}{k} \cdot \overrightarrow{O_3 P_F} = \frac{1}{k} \cdot \overrightarrow{O_3 M} - \frac{1-k}{k} \cdot \rho_{PF} \cdot \vec{n}$$

Les coordonnées de M et M', dans le repère fixe, sont donc liées par les relations:

$$X'_3 = \frac{X_1}{k} - \frac{1-k}{k} \cdot \rho_{PF} \cdot \sin \gamma \cdot \cos \beta$$

$$Y'_3 = \frac{Y_1}{k} - \frac{1-k}{k} \cdot \rho_{PF} \cdot \sin \gamma \cdot \sin \beta \tag{11}$$

$$Z'_2 = \frac{Z_1}{k} - \frac{1-k}{k} \cdot \rho_{Pf} \cdot \cos \gamma$$

La figure 6 représente la figure transformée définitive obtenue par une dernière transformation qui est une translation, de vecteur

$$\overrightarrow{O_3 O},$$

de la figure projetée obtenue précédemment. Les coordonnées d'un point de l'image transformée définitive sont données par la relation suivante:

$$\begin{bmatrix} X_3 \\ Y_3 \\ Z_3 \end{bmatrix} = \begin{bmatrix} X'_3 \\ Y'_3 \\ Z'_3 \end{bmatrix} + \begin{bmatrix} X_{03} \\ Y_{03} \\ Z_{03} \end{bmatrix} \tag{12}$$

où $(X_{03}, Y_{03}, Z_{03})$ sont les composantes du vecteur translation

$$\overrightarrow{O_3 O}.$$

Les relations (9) à (12) lient les valeurs des coordonnées $(X, Y, Z)$ et $(X_3, Y_3, Z_3)$ d'un point de l'image initiale, repéré dans le repère mobile, et d'un point de l'image transformée, repéré dans le repère fixe. L'inversion de ces relations permet de déterminer les coordonnées d'un point de l'image initiale correspondant à un point donné de l'image transformée. Ces relations sont les suivantes:

$$X = k (D_{xx} \cdot (X_3 - X_{03}) + D_{xy} \cdot (Y_3 - Y_{03}))$$
$$Y = k (D_{yx} \cdot (X_3 - X_{03}) + D_{yy} \cdot (Y_3 - Y_{03}) \tag{13}$$
$$\frac{1}{k} - 1 - k_x \cdot (X_3 - X_{03}) + k_y \cdot (Y_3 - Y_{03})$$

avec

$$D_{xx} = \frac{\cos \alpha \cos \beta \cos \gamma + \sin \alpha \sin \beta}{Ax}$$

$$D_{xy} = \frac{\cos \alpha \sin \beta \cos \gamma + \sin \alpha \cos \beta}{Ay}$$

$$D_{yx} = - \frac{\sin \alpha \cos \beta \cos \gamma + \cos \alpha \sin \beta}{Ay}$$

$$D_{yy} = \frac{-\sin \alpha \sin \beta \cos \gamma + \cos \alpha \cos \beta}{Ay} \tag{14}$$

$$k_x = \frac{\cos \beta \sin \gamma}{\rho_{PF}}$$

$$k_y = \frac{\sin \beta \sin \gamma}{\rho_{PF}}$$

L'application des formules 13 nécessite le calcul de la fonction de $X_3$ et $Y_3$, c'est-à-dire pour chaque point. Ce calcul est long car il nécessite deux multiplications dans le cas général. Par contre, dans le cas particulier où le point de fuite est rejeté à l'infini, $\rho_{PF}$ est infini donc $k = 1$ en permanence.

La relation (13) peut être simplifiée et mise sous la forme d'une relation de recurrence analogue à celle trouvée en l'absence d'effets de perspective:

$$X(X_3, Y_3) = X(X_3-1, Y_3) + D_{xx}$$

$$Y(X_3, Y_3) = Y(X_3-1, Y_3) + Dyx \qquad (15)$$

Pour le premier point de chaque ligne la relation de récurrence est la suivante:

$$X(0, Y_3) = X(0, Y_3-1) + D_{xy}$$

$$Y(0, Y_3) = Y(0, Y_3-1) + D_{yy} \qquad (16)$$

Pour le premier point d'une image la relation (13) donne les valeurs suivantes:

$$X(0, 0) = - D_{xx} \cdot X_{03} - D_{xy} \cdot Y_{03}$$

$$Y(0, 0) = - D_{yx} \cdot X_{03} - D_{yy} \cdot Y_{03} \qquad (17)$$

Cette simplification limite les effets de perspective possibles mais a le grand avantage de fournir une transformation pas plus compliquée à mettre en oeuvre qu'une transformation sans effet de perspective, puisque les formules de récurrence sont de la même forme. Ces calculs peuvent être réalisés en temps réel avec la technologie actuelle.

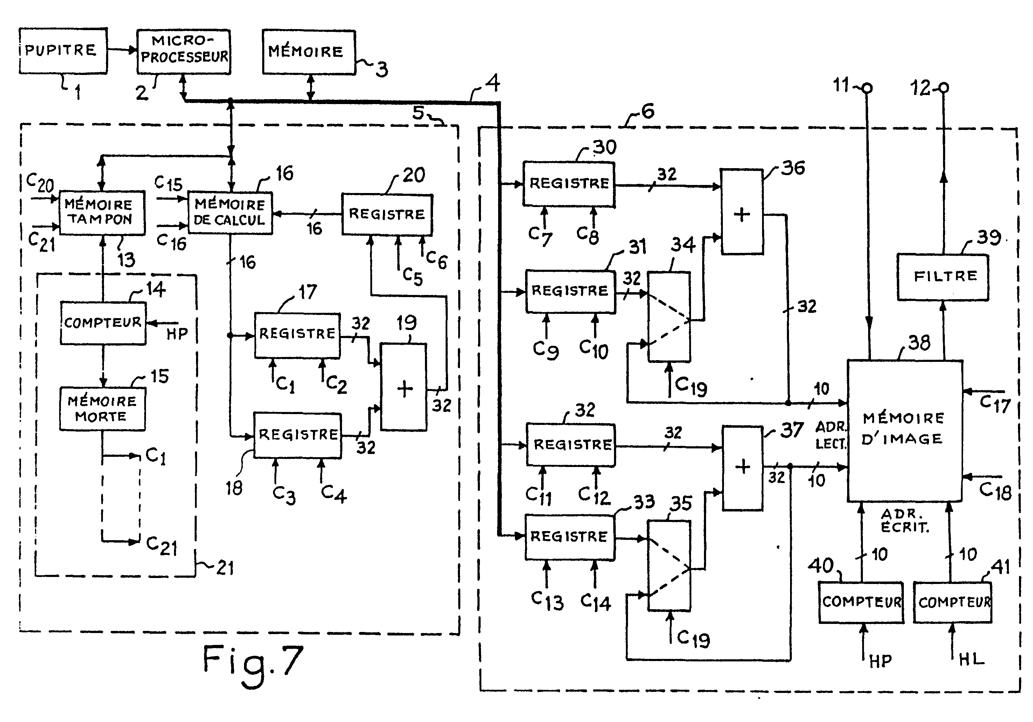

La figure 7 représente le schéma synoptique d'un exemple de réalisation d'un dispositif mettant en oeuvre le procédé selon l'invention pour réaliser une transformation géométrique sur une image vidéo quelconque. Cet exemple de réalisation comprend un pupitre 1, permettant à un operateur de commander le dispositif, un microprocesseur 2, une mémoire 3, un bus de données et d'adresses 4, un dispositif 5 dit automate-ligne, parce qu'il fonctionne à la fréquence d'analyse des lignes, un dispositif 6, dit automate-point, parce qu'il fonctionne à la fréquence d'analyse des points, une borne d'entrée 11, et une borne de sortie 12. Dans le dispositif considéré le microprocesseur 2, la mémoire 3, l'automate-ligne 5, et l'automate-point 6, sont reliés au bus 4. Le pupitre 1 est relié au microprocesseur 2. Le microprocesseur 2 détermine, à la fréquence des trames, les informations d'initialisation nécessaires au fonctionnement de l'automate-ligne 5 et de l'automate-point 6 en fonction des paramètres choisis pour la transformation, ces paramètres étant stockés dans la mémoire 3 qui est associée au microprocesseur 2. La mémoire 3 stocke notamment des données correspondant à des effets prédéterminés et que l'opérateur déclenche en appuyant simplement sur une touche.

L'automate-ligne 5 comporte une mémoire tampon 13, une mémoire de calcul 16, des moyens de commande 21, trois registres: 17, 18 et 20, et un additionneur 19. La mémoire tampon 13 possède une entrée de données et une entrée d'adresses rellées par le bus 4 au microprocesseur 2, et trois entrées reliées aux moyens de commande 21 pour recevoir une adresse de lecture, un signal de commande de lecture $C_{20}$, et un signal de commande d'écriture $C_{21}$. Pendant la durée d'analyse d'une trame d'image le microprocesseur 2 calcule puis inscrit dans la mémoire tampon 13 des données permettant d'initialiser les automates 5 et 6 pour traiter la trame suivante. Ces données sont les valeurs $X(0, 0)$, $Y(0, 0)$, $k.D_{xx}$, $k.D_{yy}$, $k.D_{xy}$, et $k.D_{yx}$, calculées en fonction des paramètres de la transformation souhaitée.

Pendant l'intervalle de suppression de trame la mémoire tampon 13 est lue à des adresses de lecture fournies par les moyens de commande 21, et les données lues sont acheminées par le bus 4 vers la mémoire de calcul 16 d'une part et vers l'automate-point 6 d'autre part. Les moyens de commande 21 comportent un compteur 14 et une mémoire morte 15. Le compteur 14 est incrémenté par un signal d'horloge HP à la fréquence d'analyse des points d'une image. Une première sortie du compteur 14 fournit une valeur d'adresse à la mémoire tampon 13, et une seconde sortie fournit une valeur d'adresse à une mémoire morte 15 qui génère des signaux de commande $C_1,...,$ $C_{21}$ qui commandent la séquence des opérations dans l'automate-ligne 5 et dans l'automate-point 6. Pendant la durée de la suppression de trame les moyens de commande 21 commandent la lecture, dans la mémoire tampon 13, de la valeur d'adresse $X(0, 0)$, $Y(0, 0)$, et des valeurs des incréments $k.D_{xx}$, $k.D_{yy}$, $k.D_{xy}$, $k.D_{yx}$, qui sont renouvellées dans la mémoire tampon 13, à la fréquence des trames, par le microprocesseur 2. La mémoire de calcul 16 et l'additionneur 19 permettent de calculer une valeur d'adresse $X(0, Y_3)$, $Y(0, Y_3)$ au début du balayage de chaque ligne de l'image transformée. Pour obtenir une dynamique et une précision suffisantes, compte-tenu du fait que le calcul est un calcul de recurrence, celui-ci est effectue sur 32 bits: 22 bits pour la partie entière et 10 bits pour la partie fractionnaire. $X(0, Y_3)$ et $Y(0, Y_3)$ sont calculés successivement. La mémoire de calcul 16 stocke des mots de 16 bits. Une sortie de données de la mémoire 16 est reliée aux entrées des registres 17 et 18 qui réalisent la conversion de deux mots de 16 bits en un mot de 32 bits sur leurs sorties respectives. Celles-ci sont respectivement reliées à deux entrées de l'additionneur 19, qui est un additionneur à 32 bits, et la sortie de ce dernier est reliée à l'entrée du registre 20 qui convertit le mot de 32 bits fourni par l'additionneur 19 en un mot de 16 bits qui est appliqué à une entrée de données de la mémoire de calcul 16. Les registres 17, 18, et 20 sont commandés chacun par deux signaux logiques, fournis par les moyens de commande 21, et qui sont respectivement C1 et C2, C3 et C4, C5 et C6. La mémoire de calcul 16 reçoit deux signaux de commande $C_{15}$ et $C_{16}$ qui commandent la lecture et l'écriture dans cette mémoire au rythme des lignes, pour effectuer le calcul des valeurs d'adresses $X(0, Y_3)$ et $Y(0, Y_3)$ correspondant au début de chaque ligne de l'image transformée. Ces signaux de commande déclenchent la transmission sur le bus 4 de ces valeurs d'adresses pour les faire parvenir à l'automate-point 6.

8

**0 128 789**

L'automate-point 6 comporte des registres 30, 31, 32, 33, des multiplexeurs à deux entrées et une sortie 34 et 35, deux additionneurs 36 et 37, deux compteurs 40 et 41, une mémoire d'image 38, et un filtre numérique 39. Les registres 30, 31, 32, 33 ont une entrée reliée au bus 4, et ont des sorties reliées respectivement à une première entrée de l'additionneur 36, à une première entrée du multiplexeur 34, à une première entrée de l'additionneur 37, et à une première entrée du multiplexeur 35. La seconde entrée de l'additionneur 36 est reliée à la sortie du multiplexeur 34. La seconde entrée du multiplexeur 34 est reliée à la sortie de l'additionneur 36. La seconde entrée de l'additionneur 37 est reliée à la sortie du multiplexeur 35. La seconde entrée du multiplexeur 35 est reliée à la sortie de l'additionneur 37. Les sorties des additionneurs 36 et 37 sont reliées respectivement a deux entrées d'adresses de la mémoire d'image 38, pour lui fournir une adresse de lecture $X(X_3, Y_3)$, $Y(X_3, Y_3)$. Les compteurs 40 et 41 sont commandés par les signaux d'horloge HP ET HL à la fréquence d'analyse des points et à la fréquence d'analyse des lignes. Ils possèdent deux sorties reliées respectivement à deux entrées de la mémoire d'image 38 pour lui fournir une adresse d'écriture. La mémoire d'image 38 possède une entrée de commande d'écriture recevant le signal de commande $C_{17}$, une entrée de commande de lecture recevant un signal de commande $C_{18}$, une entrée de données reliée à une borne d'entrée 11 recevant les valeurs numériques d'un signal vidéo correspondant à l'image initiale, et une sortie de données reliée à l'entrée du filtre 39. La sortie du filtre 39 est reliée à une borne de sortie 12 pour lui fournir les valeurs numériques d'un signal vidéo correspondant à l'image transformée.

Les registres 30, 31, 32, 33 peuvent stocker chacun un mot de 32 bits reçu en deux paquets de 16 bits. Ces registres sont commandés respectivement par les signaux de commande $C_7$ et $C_8$, $C_9$ et $C_{10}$, $C_{11}$ et $C_{12}$, $C_{13}$ et $C_{14}$, fournis par les moyens de commande 21. Le registre 30 permet de stocker la valeur d'incrément $k.D_{xx}$, le registre 31 permet de stocker la valeur initiale $X(0, Y_3)$. L'additionneur 36 permet d'effectuer une addition sur 32 bits. Sa sortie fournit un mot binaire de 32 bits parmi lesquels les bits de poids $2^{10}$ à $2^{19}$ constituent une valeur d'adresse $X(X_3 Y_3)$ pour la lecture de la mémoire d'image 38. Le multiplexeur 34 achemine la valeur initiale fournie par la sortie du registre 31 pendant la détermination de la valeur de $X(0, Y_3)$ correspondant au premier point d'une ligne, puis pour tous les autres points de cette ligne le multiplexeur 34 achemine la valeur de $X(X_3 -1, Y_3)$ calculée immédiatement précédemment et disponible sur la sortie de l'additionneur 36. L'additionneur 37, associé avec les registres 32 et 33, et avec le multiplexeur 35, calcule de manière analogue une valeur d'adresse $Y(X_3, Y_3)$ pour chaque point d'une ligne. La mémoire d'image 38 reçoit donc une adresse de lecture constituée de deux mots binaires de 10 bits. Le traitement des images étant réalisé en temps réel la mémoire d'image 38 subit alternativement une écriture et une lecture correspondant à un point, chacune étant effectuée à la fréquence standard de 13,5 MHz. L'adresse d'ecriture reçue par la mémoire d'image 10 est constituée de deux mots de 10 bits fournis respectivement par les compteurs 40 et 41. L'écriture et la lecture dans la mémoire d'image 38 sont commandées respectivement par les signaux de commande $C_{17}$ et $C_{18}$ générés par la mémoire morte 15 des mémoires de commande 21. Les données numériques fournies par la sortie de données de la mémoire d'image 38 sont filtrés par le filtre numérique 39 puis sont appliqués à la borne de sortie 12 et constituent les valeurs du signal vidéo de l'image transformée.

Le procédé selon l'invention est avantageux notamment pour réaliser des transformations géométriques sur une image vidéo constituée par une figure géométrique simple, telle qu'une figure générée par un générateur de formes électronique. Dans ce cas, la figure étant simple, il n'est pas nécessaire d'utiliser une mémoire 38 ayant une capacité égale à une image. Il est possible de générer la figure en stockant une faible quantité de donnees, tout en utilisant le procédé selon l'invention pour réaliser une transformation géométrique par des calculs portant sur les valeurs d'adresses de ces donnees. Par exemple, une image initiale constituée par un carré tel que celui représenté sur la figure 2, permet d'obtenir une image transformée comportant un losange ayant des dimensions quelconques, une position quelconque, et éventuellement une déformation donnant un effet de perspective. Dans cet exemple la figure peut être représentée par une équation de la forme:

$$H(X, Y) = |X| + |Y| = \text{constante}.$$

Cette équation définit une famille de carrés centrés sur l'origine, chaque valeur de la constante correspondant à un carré différent. Chaque point du repère 0, X, Y appartient à l'intérieur ou à l'extérieur d'un carré donné selon que la valeur $H(X, Y)$ est inférieure ou supérieure à la valeur de la constante correspondant au carré donné. Pour générer un signal vidéo correspondant à une figure constituée par un carré, ayant par exemple une certaine teinte différente de la teinte du fond, il suffit de repérer chaque point de l'image à obtenir par des coordonnées cartésiennes $(X_3, Y_3)$ et de calculer pour chaque point la valeur de $H(X, Y)$ en fonction de $X_3$ et $Y_3$ par les formules mentionnées précédemment, puis de comparer cette valeur par rapport à la constante fixée qui détermine le carré à obtenir. Si la valeur calculée est égale à la constante le point considéré appartient à la bordure du carré, si la valeur calculée est inférieure à la constante le point considéré appartient à l'intérieur du carré, et si la valeur calculée est supérieure à la constante le point considéré appartient à l'exterieur du carré. Il suffit de commander ensuite un commutateur de signaux vidéo par un signal logique résultant de cette comparaison.

Pour déterminer la valeur de $H(X, Y)$, les valeurs $|X|$ et $|Y|$ sont stockées respectivement dans deux tables, ces deux tables sont adressées respectivement par les valeurs X et Y. Le dispositif de stockage est constitué d'une part de ces deux tables, et d'autre part d'un additionneur permettant d'additionner les valeurs lues respectivement dans chacune de ces tables. Le dispositif de stockage dans ce cas n'est donc pas une mémoire d'image, mais un dispositif beaucoup moins coûteux constitué des deux tables et d'un additionneur.

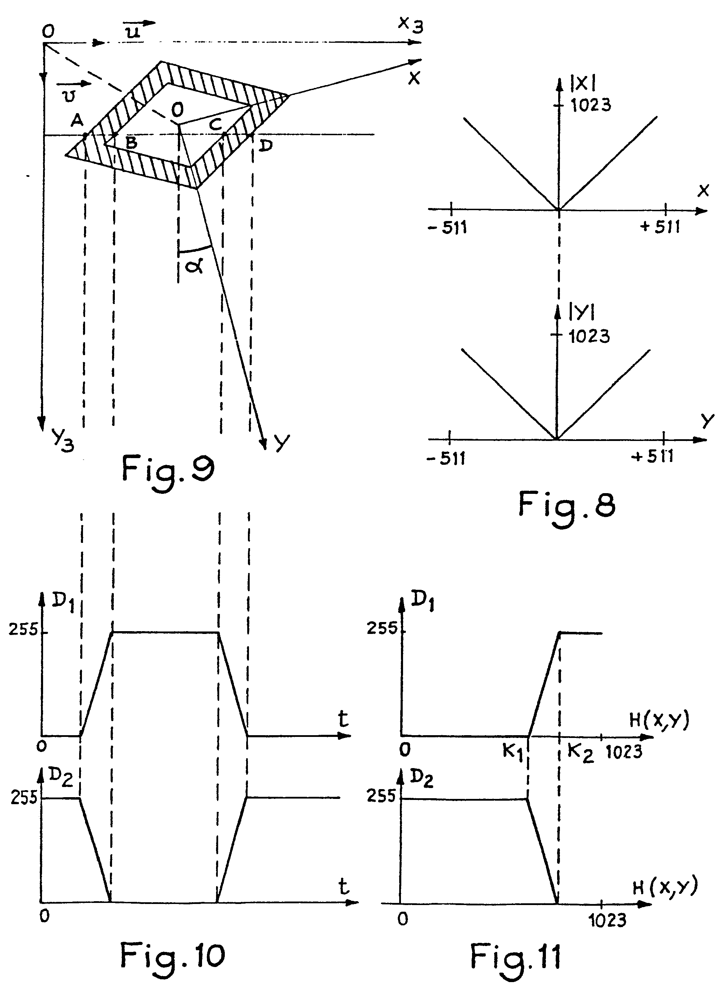

La figure 8 représente les graphes des valeurs contenues dans les tables dans un exemple de réalisation permettant de générer une image initiale constituée par un carré. Les calculs d'adresses par les formules

9

mentionnées précédemment permettent d'obtenir un losange ayant des dimensions et une position quelconques, et ayant éventuellement un effet de perspective. Sur la figure 8 les variables X et Y prennent les valeurs allant de - 511 à + 511, ce qui signifie que chacune des tables stocke 1024 mots de 10 bits. Les dimensions du losange obtenu dans l'image transformée peuvent être modifiées, d'une part en réalisant une affinité, mais aussi en modifiant la valeur de la constante à laquelle est comparée la valeur de $H(X, Y)$.

Dans le cas où un générateur de formes électronique est utilisé en association avec un commutateur à gain variable pour obtenir une image où une partie, par exemple en forme de losange, est fournie par un premier signal vidéo, alors qu'une autre partie, le fond, est fournie par un second signal vidéo, on peut souhaiter réaliser une transition floue sur les bords du losange. La figure 9 représente une image transformée correspondant à cet exemple. La zone hachurée est une zone floue obtenue en additionnant les deux signaux vidéo après les avoir multipliés respectivement par des coefficients variant en sens inverse. Ces coefficients sont proportionnels à des valeurs numériques $D_1$ et $D_2$ fournies par deux sorties du générateur de formes électronique, et qui sont représentées sur la figure 10 en fonction du temps, et sur la figure 11 en fonction de la valeur $H(X, Y)$. Les variations des valeurs $D_1$ et $D_2$ représentées sur la figure 10 correspondent au balayage de la ligne A, B, C, D de l'image transformée représentée sur la figure 9. Les points A, B, C, D sont les points d'intersection de cette ligne avec les frontières de la zone floue. Pendant le balayage du segment AB la valeur $D_1$ passe de 0 à 255 alors que la valeur $D_2$ passe de 255 à 0 dans le même temps. Pendant la durée du balayage du segment CD la valeur $D_1$ passe de 255 à 0 alors que la valeur $D_2$ passe de 0 à 255. Lorsqu'il n'y a pas à réaliser une transition floue, la valeur de $H(X, Y)$ peut être comparée à la constante par un simple comparateur numérique. Par contre lorsqu'il est nécessaire de realiser une transition floue, le comparateur est remplacé par une mémoire fournissant deux valeurs numériques $D_1$ et $D_2$ selon les graphes donnés par la figure 11. La taille du losange et la largeur de la bordure floue sont déterminées par deux constantes $K_1$, $K_2$ telles que: $0 < K_1 < K_2 < 1023$. Quand $H(X, Y)$ varie de 0 à 1023 la valeur $D_1$ reste constante et égale à 0 pour $H(X, Y) < K_1$; elle augmente linéairement jusqu'à 255 pour $H(X, Y)$ variant de $K_1$ à $K_2$; puis elle est constante pour $H(X, Y)$ variant de $K_2$ à 1023. La valeur $D_2$ est constante, et égale à 255 pour $H(X, Y) < K_1$; puis elle décroît linéairement de 255 à 0 pour $H(X, Y)$ variant de $K_1$ à $K_2$, puis elle est constante, et égale à 0, pour $H(X, Y)$ variant de $K_2$ à 1023.

Un autre effet peut être obtenu sur la bordure d'une figure, il consiste à entourer la découpe, constituée par le losange, d'une bordure colorée ayant une teinte fixée. Dans ce cas le générateur de formes électronique est associé non seulement à un commutateur à gain variable possédant deux voies, mais aussi à un commutateur permettant d'acheminer un signal vidéo correspondant à la teinte de la bordure souhaitée. Le générateur de formes électronique fournit à ces commutateurs trois signaux binaires: un premier signal prend la valeur 0 pour $H(X, Y) < K_2$ et la valeur 255 pour $H(X, Y) > K_2$; un deuxième signal prenant la valeur 255 pour $H(X, Y) > K_2$, et prenant la valeur 0 dans le cas contraire; et un troisième signal prenant la valeur 255 pour $K_1 < H(X, Y) < K_2$ et prenant la valeur 0 dans le cas contraire. Le premier signal autorise le passage du signal vidéo correspondant au fond de l'image transformée, le second signal autorise le passage du signal vidéo correspondant à l'intérieur de la figure découpée, et le troisième signal autorise le passage du signal video générant la teinte souhaitée pour la bordure. Ces trois signaux peuvent être générés, soit par une combinaison de comparateurs numériques, soit par une mémoire recevant pour valeurs d'adresses les valeurs $H(X, Y)$ et fournissant les trois signaux binaires sur une sortie de données.

Le procédé selon l'invention pour réaliser une transformation géométrique sur une image vidéo constituée d'une figure géométrique peut être généralisé à toute figure pouvant être stockée dans un dispositif de stockage adressable par les valeurs de coordonnées (X, Y) repérant les points de cette figure dans un repère cartésien. Le stockage d'une figure dans un dispositif adressable par les coordonnées X et Y est particulièrement simple lorsque l'équation de la figure peut être décomposée en une combinaison de fonctions monodimensionnelles, comme c'est le cas pour l'équation $H(X, Y) = |X| + |Y| =$ constante. En règle générale le dispositif de stockage, qui n'est pas une mémoire d'image, nécessite une mémoire de capacité beaucoup plus faible. Il contient une table de valeurs pour chaque fonction monodimensionnelles. Chaque point $(X_3, Y_3, 0)$ considéré dans l'image transformée, est représenté par un mot binaire M obtenu en lisant dans les tables les valeurs des fonctions composant l'équation, à des adresses fonctions des valeurs d'adresses X et Y appliquées au dispositif de stockage, puis en calculant la valeur de l'équation à partir des valeurs lues dans les tables. Ce procédé est particulièrement simple à mettre en oeuvre lorsque l'équation est de la forme $F(X) + G(Y) =$ constante, car il suffit de deux tables: l'une donnant les valeurs $F(X)$ en fonction des valeurs de X, et l'autre donnant les valeurs de $G(Y)$ en fonction des valeurs de Y. Les valeurs fournies par ces deux tables sont additionnées pour déterminer la valeur de l'équation et obtenir une valeur $H(X, Y)$ traduisant l'appartenance ou la non-appartenance du point de coordonnées (X, Y) de l'image initiale, à l'intérieur de la figure, selon que cette valeur est inférieure ou supérieure à la valeur donnée à la constante dans l'équation qui définit la figure.

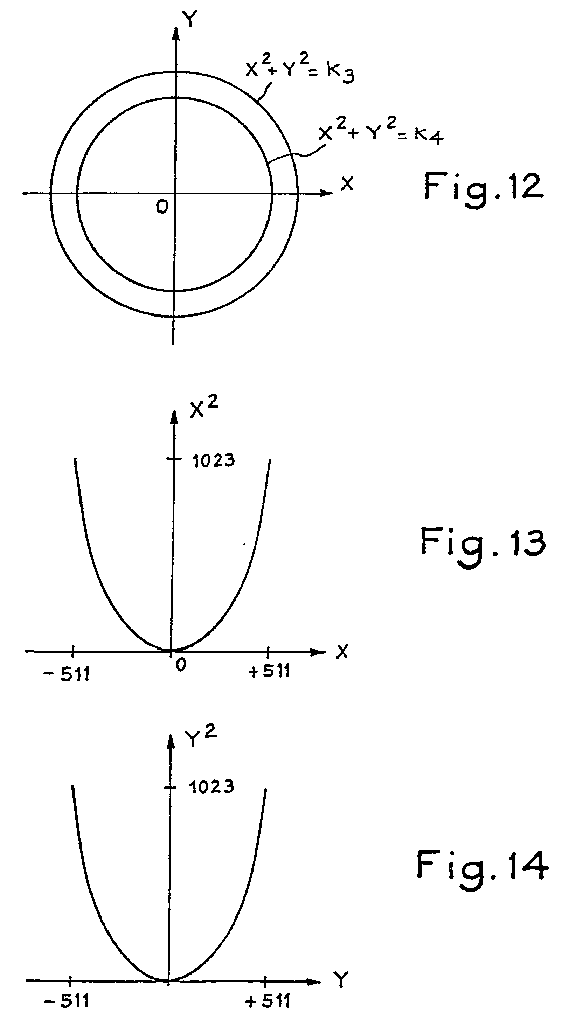

La figure 12 représente un autre exemple de figure pouvant être représentée par une équation composée de deux fonctions monodimensionnelles. Dans cet exemple la figure constituant l'image initiale est un cercle centré sur l'origine 0 du repère mobile. Il a pour équation $X^2 + Y^2 =$ constante. Les transformations géométriques décrites précédemment permettent d'obtenir notamment une découpe en forme d'ellipse, ou une découpe en forme d'ellipse déformée par un effet de perspective. Dans cet exemple le dispositif de stockage comporte une mémoire sstockant une table des valeurs de $X^2$ en fonction des valeurs de X et une table des valeurs de $Y^2$ en fonction des valeurs de Y, et un additionneur.

Les figures 13 et 14 représentent les graphes des valeurs contenues dans les deux tables du dispositif de stockage pour générer n'importe quel cercle, quel que soit son diamètre. X et Y varient entre - 511 et + 511

alors que $X^2$ et $Y^2$ prennent les valeurs comprises entre 0 et 1023. Le nombre de valeurs stockées est égal à 1024 dans chacune des tables ce qui permet de générer une découpe dont les bords paraissent très réguliers. Si la valeur $X^2 + Y^2$ est comparée à des constantes $K_3$ et $K_4$ telles que $K_3 \neq K_4$, les deux figures correspondantes sont des cercles centrés sur 0 et de rayons différents. Dans cet exemple la valeur de la constante définissant le cercle doit être choisie proche de 1023 pour bénéficier d'une plus grande régularité du tracé, une réduction de la taille du cercle étant toujours possible en réalisant une affinité de rapport inférieur à 1. Il serait possible de garder un rapport d'affinité égal à 1 et de réduire la taille du cercle en prenant une faible valeur pour la constante à laquelle est comparée la valeur de l'équation, mais alors la figure obtenue serait moins régulière, des discontinuités en marches d'escalier seraient plus facilement visibles sur l'image transformée car les paraboles constituant les graphes de $X^2$ et $Y^2$ ont une faible pente au voisinage des faibles valeurs.

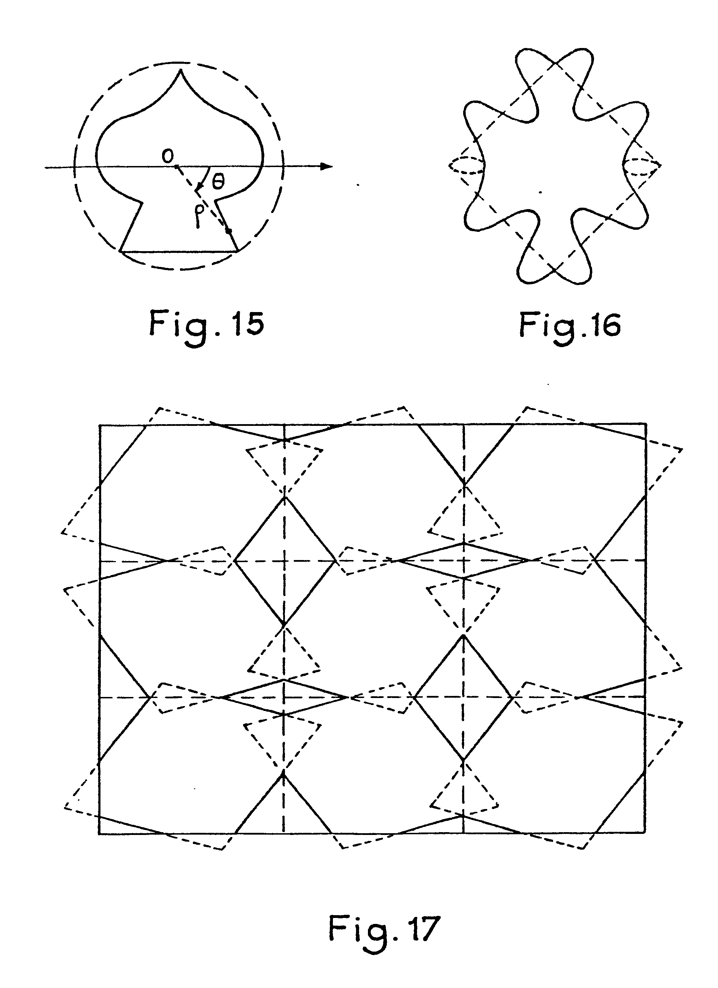

Certaines figures n'ont pas d'équations simples en coordonnées cartésiennes mais par contre sont facilement représentables en coordonnées polaires $(\rho, \theta)$, par exemple l'as de pique ou bien un losange dont les côtés sont des sinusoïdes. Ces exemples sont représentés sur les figures 15 et 16 respectivement. L'as de pique peut être considéré comme un cercle modulé par une fonction de l'angle $\theta$, alors que le losange, dont les côtés sont des sinusoïdes de période égale à deux fois la longueur d'un côté, peut être considéré comme étant un carré dont les côtés sont modulés par une courbe orthogonale qui est en l'occurrence une sinusoïde.

D'une façon générale une figure géométrique qui est représentable en coordonnées polaires $(\rho, \theta)$ par une équation de la forme $\rho(\theta) \cdot (1 + g(\theta)) = $ constante peut être considérée comme un cercle dont le rayon est modulé par une fonction de $\theta$. Le procédé de stockage de la figure consiste à stocker sept tables contenant respectivement: les valeurs de $X^2$, $Y^2$, $- \text{Log } X$, $\text{Log } Y$, en fonction de $(X, Y)$, les valeurs de $\rho = \sqrt{X^2 + Y^2}$ en fonction de $X^2 + Y^2$, les valeurs de $\theta = \text{Arctg } \frac{Y}{X}$ en fonction de $\text{Log } X$ et de $\text{Log } Y$, et les valeurs de $g(\theta)$ en fonction de $\theta$; et consiste à déterminer un mot binaire M en lisant dans les tables $X^2$, $Y^2$, $\text{Log } X$, $\text{Log } Y$, puis en calculant $X^2 + Y^2$ et $\text{Log } Y - \text{Log } X$, puis en lisant dans les tables la valeur de $\rho = \sqrt{X^2 + Y^2}$ et $\theta = \text{Arctg } \frac{Y}{X}$, puis en lisant dans les tables $g(\theta)$, puis en calculant $\rho(\theta).(1 + g(\theta))$. La valeur obtenue est comparée par rapport à une constante qui définit la taille de la figure. Si la valeur obtenue est inférieure à la constante le point de coordonnées $(X, Y)$ de l'image initiale est à l'intérieur de la figure, sinon il est à l'extérieur.

De même, d'une façon générale une figure géométrique qui peut être représentée par une équation de la forme:

$(|X| + |Y|).(1 + h(|X| - |Y|)) = $ constante, en coordonnées cartésiennes $(X, Y)$, peut être considérée comme une figure déduite d'un carré par une modulation des côtés par une courbe orthogonale. Le procédé de stockage de la figure consiste alors à la stocker sous la forme de sept tables contenant respectivement les valeurs de: $|X|$ en fonction des valeurs de X, les valeurs de $-|Y|$ en fonction des valeurs de Y, et les valeurs de $h(|X| - |Y|)$ en fonction des valeurs de $(|X| - |Y|)$; et consiste à restituer pour chaque point de coordonnées $(X, Y)$ de l'image initiale un mot binaire M déterminé en lisant les valeurs $|X|, |Y|, -|Y|$ dans les tables, puis en calculant $|X| + |Y|$ et $|X| - |Y|$, puis en lisant $h(|X| - |Y|)$ dans les tables, puis en calculant:

$$M = (|X| + |Y|).(1 + h(|X| - |Y|))$$

Cette valeur est ensuite comparée à la constante de l'équation qui définit la figure, le point $(X, Y)$ étant à l'intérieur de la figure si la valeur de M est inférieure à la constante, et étant extérieur à la figure si la valeur M est supérieure à la constante.

Ces deux procédés de stockage permettent de realiser des figures très diverses en utilisant des moyens de stockage comportant des tables numériques necessitant une faible capacité de memoire et comportant des opérateurs arithmétiques: additionneurs, soustracteurs, multiplicateurs.

Un tel dispositif de stockage est de toute façon beaucoup moins coûteux qu'une mémoire d'image.

Dans le cas où la transformation géométrique réalisée par le procédé selon l'invention est appliquée à une image générée par un générateur de formes électronique un effet particulièrement intéressant est la multiplication de motifs, avec ou sans effet de miroir. La figure 17 représente une image transformée obtenue en multipliant un motif trois fois horizontalement et trois fois verticalement, chaque dédoublement du motif est réalisé avec un effet de miroir, c'est-à-dire une symétrie par rapport à un axe.

Pour réaliser un effet de multiplication horizontale de l'image initiale dans l'image transformée, sans effet de miroir, le procédé consiste à réinitialiser la valeur des adresses de lecture X et Y périodiquement au cours de chaque ligne de balayage de l'image transformée au lieu de continuer à appliquer les formules de récurrence (15) tout au long de la ligne. La réinitialisation est faite avec les valeurs données par les formules (16), exactement comme pour le premier point de la ligne. Dans cet exemple, pour obtenir une multiplication par trois horizontalement il faut réaliser l'initialisation de la valeur de X et Y à une fréquence égale à trois fois la fréquence de balayage des lignes.

Pour réaliser une multiplication verticale, sans effet de miroir, la valeur de X et de Y est initialisée périodiquement pendant la durée d'une trame par les valeurs calculées selon les formules (17) comme pour le premier point d'une trame. Dans cet exemple de multiplication verticale par trois, la fréquence de ces réinitialisations selon les formules (17) est égale à trois fois la fréquence des trames.

Pour obtenir, en plus de la multiplication, un effet de miroir le signe des incréments $D_{xx}$ et $D_{yx}$ est inversé lors de chaque réinitialisation par les valeurs données par les formules (16) afin d'obtenir des symétries par rapport à des axes verticaux, et le signe des incréments $D_{yy}$ et $D_{xy}$ est inversé lors de chaque réinitialisation avec les valeurs données par les formules (17) afin d'obtenir des symetries par rapport à des axes horizontaux.

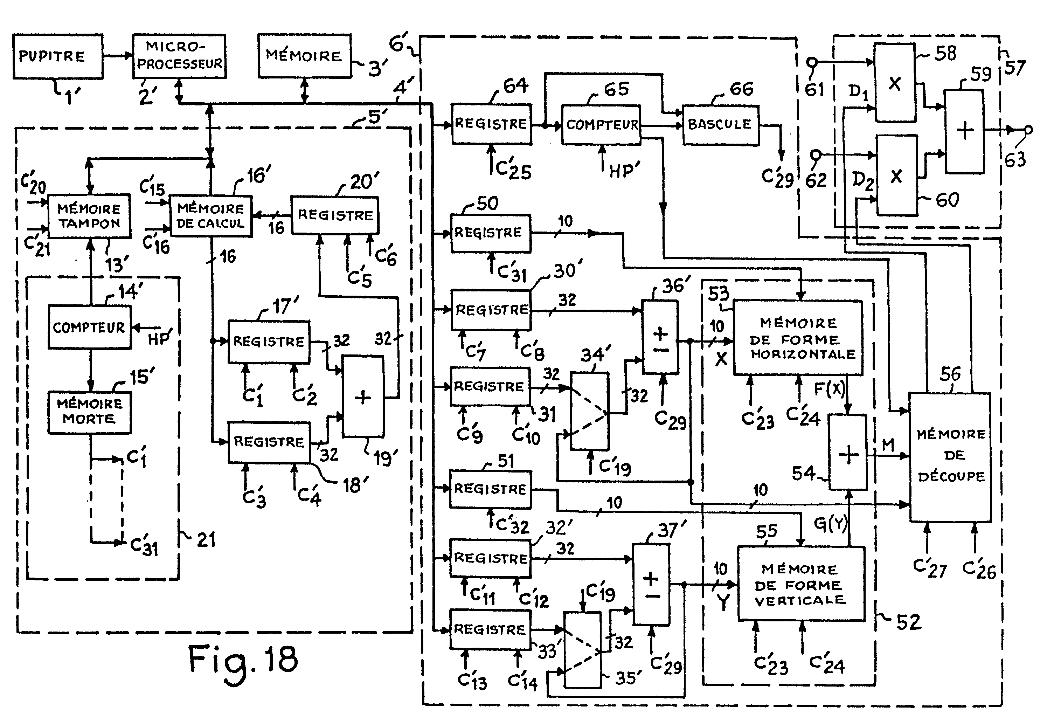

La figure 18 représente le schéma synoptique d'un exemple de réalisation d'un générateur de formes électroniques associé à un commutateur vidéo à gain variable, mettant en oeuvre le procédé selon l'invention pour réaliser des transformations géométriques sur les formes qui sont générées. Une partie de ce générateur de formes est analogue à une partie de l'exemple de réalisation représenté sur la figure 7; les éléments analogues portent la même référence numérique mais avec l'indice'. Cette partie analogue est constituée d'un pupitre 1', d'un microprocesseur 2', d'une mémoire 3', d'un bus de données et d'adresses 4', et d'un automate-ligne 5'. Dans l'exemple de réalisation d'un générateur de formes les moyens de commande 21' génèrent des commandes $C'_1... C'_{28}$ qui sont plus nombreuses que dans le cas du dispositif pour réaliser une transformation sur une image quelconque stockée dans une mémoire d'image. Cet exemple de réalisation comporte en outre un automate-point 6' et un commutateur vidéo à gain variable 57. L'automate-point 6' comporte certains éléments qui sont analogues à ceux de l'automate-point 6 de l'exemple de réalisation représenté sur la figure 7, ces éléments analogues comportent le même numéro de référence avec l'indice'.

Le commutateur vidéo à gain variable 57 est constitué de deux multiplicateurs 58 et 60, et d'un additionneur 59. Il reçoit sur des bornes d'entrées 61 et 62 deux suites de valeurs numériques correspondant à deux signaux vidéo, et fournit sur une borne de sortie 63 une suite de valeurs numériques d'un signal vidéo correspondant à une image constituée par une partie de l'image fournie par le premier signal vidéo, et par une partie de l'image fournie par le second signal vidéo. Le premier signal video est appliqué à la première entrée du multiplicateur 58 qui reçoit sur une seconde entrée une valeur numérique $D_1$. Le second signal vidéo est appliqué à une première entrée du multiplicateur 60 qui reçoit sur une seconde entrée une valeur numérique $D_2$. Les valeurs fournies par les sorties des multiplicateurs 58 et 60 sont additionnées par l'additionneur 59 et les valeurs résultantes constituent les valeurs fournies à la borne de sortie 63.

L'automate-point 6' comporte sept registres: 64, 50, 30', 31', 51, 32', 33'; un compteur 65, une bascule 66, deux multiplexeurs 34' et 35', deux additionneurs-soustracteurs 36' et 37', un dispositif 52 de stockage d'une figure, et une mémoire 56 dite mémoire de découpe. Dans cet exemple la figure est représentable par une équation de la forme F(X) + G(Y) = constante. Le dispositif de stockage 52 est constitue par une mémoire vive 53 dite mémoire de forme horizontale, stockant les valeurs de F(X) en fonction des valeurs de X, d'une mémoire vive 55 dite mémoire de forme verticale, stockant les valeurs de G(Y) en fonction des valeurs Y, et d'un additionneur 54. Tous les registres ont une entrée reliée au bus de données et d'adresses 4'. Le registre 64 a une sortie reliée à des entrées de commande et d'initialisation du compteur 65 et de la bascule 66, et a une entrée de commande recevant un signal de commande $C'_{25}$ fourni par les moyens de commande 21 de l'automate-point 5'. Le compteur 65 possède une entrée d'horloge recevant un signal d'horloge HP' à la fréquence des points, et possède une sortie reliée à une entrée de commande de la bascule 66. La bascule 66 se comporte comme un diviseur de fréquence par deux et fournit un signal de commande $C'_{19}$ à une entrée de commande de l'additionneur-soustracteur 36' et à une entrée de commande de l'additionneur-soustracteur 37'. Le registre 50 possède une entrée de commande recevant un signal $C'_{31}$ fourni par les moyens de commande 21, et une sortie fournissant un mot binaire de dix bits à une entrée de données de la mémoire de forme horizontale 53. Le registre 51 possède une entrée de commande recevant un signal de commande $C'_{32}$ fourni par les moyens de commande 21 et une sortie fournissant un mot binaire de dix bits à une entrée de données de la mémoire de forme verticale 55. Le registre 30' possède deux entrées de commande recevant des signaux de commande $C'_7$ et $C'_8$ fournis par les moyens de commande 21, et possède une sortie fournissant un mot binaire de 32 bits à une première entrée de l'additionneur-soustracteur 36'. Le registre 31' possède deux entrées de commande recevant des signaux de commande $C'_9$ et $C'_{10}$, et possède une sortie fournissant un mot binaire de 32 bits à une première entrée du multiplexeur 34'. Une seconde entrée du multiplexeur 34' est reliée à la sortie de l'additionneur-soustracteur 36', et sa sortie est reliée à une seconde entrée de cet additionneur-soustracteur.

Les multiplexeurs 34' et 35' sont commandés par un signal de commande $C'_{19}$ fourni par les moyens de commande 21.

Le registre 32' est commandé par des signaux de commande $C'_{11}$ et $C'_{12}$, et possède une sortie fournissant un mot binaire de 32 bits à une première entrée de l'additionneur-soustracteur 37'. Le registre 33' est commandé par des signaux de commande $C'_{13}$ et $C'_{14}$, et possède une sortie fournissant un mot binaire de 32 bits à une première entrée du multiplexeur 35'. Le multiplexeur 35' possède une seconde entrée reliée à la sortie de l'additionneur-soustracteur 37', et une sortie fournissant un mot binaire de 32 bits à la seconde entrée de l'additionneur-soustracteur 37'.

Le fonctionnement en additionneur ou en soustracteur des additionneurs-soustracteurs 36' et 37' est commandé par le signal de commande $C'_{29}$ fourni par la bascule 66. La sortie de l'additionneur-soustracteur 36' fournit un mot binaire de 10 bits à une entrée d'adresses de lecture et d'écriture de la mémoire de forme horizontale 53. La sortie de l'additionneur-soustracteur 37' fournit un mot binaire de 10 bits à une entrée d'adresse de lecture et d'écriture de la mémoire de forme verticale 55. Ces 10 bits sont constitués par les bits de poids $2^{10}$ à $2^{19}$ parmi les 32 bits fournis par la sortie des additionneurs-soustracteurs 36' et 37'.

L'écriture et la lecture dans la mémoire de forme horizontale 53 et dans la mémoire de forme verticale 55 sont commandées respectivement par des signaux de commande $C'_{23}$ et $C'_{24}$. Une sortie de données de la mémoire 53 et une sortie de données de la mémoire 55 sont reliées respectivement à une première et une seconde entrée de l'additionneur 54. La sortie de l'additionneur 54 constitue la sortie du dispositif de stockage 52 et fournit un mot binaire M. Le mot binaire M est appliqué à une entrée d'adresses de lecture de la mémoire de découpe 56. La mémoire 56 possède d'autre part une entrée de données et une entrée d'adresses d'écriture, reliées respectivement à la sortie de l'additionneur-soustracteur 36' et a la sortie du compteur 65, et deux entrées de commande, respectivement pour l'écriture et pour la lecture, recevant des signaux de

12

commande C'$_{27}$ et C'$_{26}$ fournis par les moyens de commande 21.

Le pupitre 1' du dispositif générateur de formes permet de commander un grand nombre d'effets, et un grand nombre de paramètres pour chaque effet: le numéro de l'effet, sa taille, le cadrage horizontal, le cadrage vertical, le taux de compression verticale ou horizontale, l'angle de rotation, la largeur d'une bordure floue, le nombre de répétitions horizontales, le nombre de répétitions verticales, l'effet de miroir, l'effet de perspective, etc. Un microprocesseur incorporé au pupitre 1' transmet ces paramètres au microprocesseur 2' du générateur de formes et le microprocesseur 2' stocke ces paramètres dans la mémoire 3' et appelle un module de programmes réalisant les initialisations propres à l'effet demandé, ces initialisations comportant notamment le chargement de la mémoire de forme horizontale 53, et de la mémoire de forme verticale 55. Les données des mémoires 53 et 55 sont stockées sous la forme de bibliothèque dans la mémoire 3' car elles sont invariables pour un effet donné. Le microprocesseur 2' calcule des données d'initialisation permettant à l'automate-point 6' de calculer les données de la mémoire de découpe 56 en fonction de la largeur de la bordure floue éventuellement à réaliser. Toutes ces données sont inscrites dans la mémoire tampon 13' de l'automate-ligne 5' pendant la durée d'une trame, sous la commande du microprocesseur 2'. Pendant la durée de la suppression de trame ces données sont transférées, par le bus 4' de la mémoire tampon 13' vers les registres 64, 50, 30', 31', 51, 32', 33'. En outre la mémoire tampon 13' fournit des données d'initialisation de l'automate-ligne 5', qui sont chargées dans la mémoire de calcul 16'. Ces données d'initialisation sont la valeur d'adresse X(0, 0), Y(0, 0), les valeurs des incréments: k.D$_{xy}$ et k.D$_{yy}$, les valeurs des adresses (X, Y) pour l'effet de miroir ou l'effet de répétition.

La lecture de la mémoire tampon 13' est réalisée pendant la suppression trame à une adresse fournie par la sortie du compteur 14', sous la commande du signal de commande C'$_{21}$ fourni par les moyens de commande 21.

Tout d'abord les moyens de commande 21 commandent le transfert de la mémoire tampon 13' vers le registre 30' et le registre 31' de données permettant à l'additionneur-soustracteur 36' de calculer les données à charger dans la mémoire de découpe 56 pour obtenir une découpe ayant la taille souhaitée et ayant une bordure floue de la largeur souhaitée. Les valeurs calculées sont par exemple celles données par les graphes représentés sur la figure 11. Au commencement de ce calcul le multiplexeur 34' relie la sortie du registre 31' à la seconde entrée de l'additionneur-soustracteur 36', puis le multiplexeur 34' relie la sortie de l'additionneur soustracteur 36' à sa seconde entrée, sous la commande du signal C'$_{19}$ fourni par les moyens de commande 21.

D'autre part les moyens de commande 21 commandent le transfert, de la mémoire tampon 13' vers la mémoire de forme horizontale 53 et la mémoire de forme verticale 55, des données définissant la forme de la figure à découper. Ces données transitent respectivement par le registre 50 et par le registre 51, puis sont inscrites dans les mémoires 53 et 55 à des adresses fournies respectivement par les additionneurs-soustracteurs 36' et 37' qui calculent une suite d'adresses allant de 0 à 1023 à partir d'une valeur initiale 0 stockée dans le registre 31' et dans le registre 33', et à partir d'une valeur d'incrément, égale à l'unité, stockée dans le registre 30' et dans le registre 32'. Au début de ce calcul les multiplexeurs 34' et 35' sont commutes de façon à relier respectivement le registre 31' et le registre 33' à la seconde entrée de l'additionneur-soustracteur 36' et à la seconde entrée de l'additionneur-soustracteur 37'.

Ensuite les moyens de commande 21 commandent le transfert de la mémoire tampon 13' aux registres 30' et 32' de valeurs d'incréments k.D$_{xx}$ et k.D$_{yy}$, et vers les registres 31' et 33' de valeurs d'adresses X(0, Y$_3$) et Y(0, Y$_3$) correspondant au premier point de la prochaine trame de l'image transformée.

Durant chaque suppression de ligne les moyens de commande 21 commandent la mémoire de calcul 16' et les registres 17', 18', 20' afin de calculer les adresses correspondant au premier point de la ligne suivante. Ces valeurs d'adresses sont stockées dans la mémoire de calcul 16' puis sont transmises par le bus 4' aux registres 30' et 32'.

Dans cet exemple de réalisation, les moyens de stockage 52 permettent de générer des formes décrites par une équation de la forme H(X, Y) = F(X) + G(Y). Le mot binaire M fourni par la sortie de l'additionneur 54 a pour valeur H(X, Y). La mémoire de découpe 56 est prévue pour fournir deux signaux de commande, de valeurs D$_1$ et D$_2$, permettant de réaliser des bordures floues. L'adaptation de la mémoire de découpe pour réaliser une bordure colorée selon le procédé exposé précédemment, est à la portée de l'homme de l'art.

Dans cet exemple il est prévu de pouvoir réaliser une multiplication des motifs avec ou sans effet de miroir. Les moyens de commande 21 commandent le chargement d'un mot binaire dans le registre 64 pour commander et initialiser le compteur 65 et la bascule 66, afin de fournir un signal d'horloge à la bascule 66 aux instants correspondant au début du balayage d'un motif sur chaque ligne. La bascule 66 permet alors de générer le signal de commande C'$_{29}$ commandant alternativement une incrémentation et une décrémentation des adresses fournies par les additionneurs-soustracteurs 36' et 37' afin d'obtenir l'effet de miroir. Dans le cas où l'effet de miroir n'est pas souhaité une sortie du registre 64 fournit a une entrée d'inhibition de la bascule 66 un signal permettant de maintenir le signal de commande C'$_{29}$ à une valeur fixée faisant fonctionner les additionneurs-soustracteurs 36' et 37' comme additionneurs.

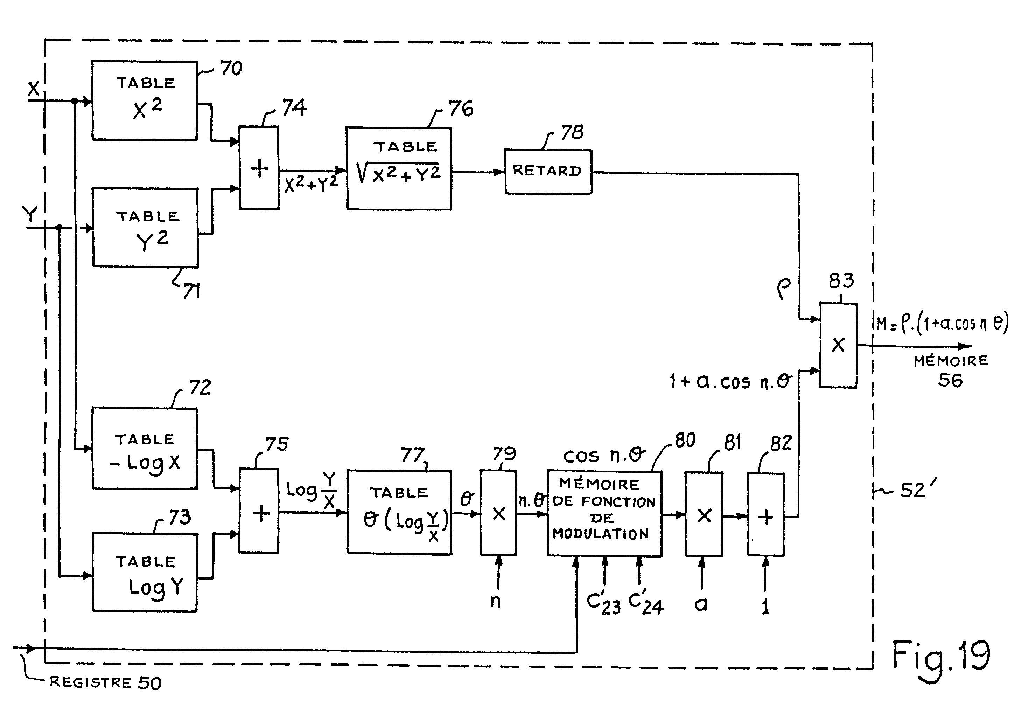

La figure 19 représente une variante 52' du dispositif 52 de stockage de l'image initiale, pour générer une figure obtenue en modulant la forme d'un cercle par une sinusoïde. Dans cet exemple une sortie du dispositif 52' fournit un mot binaire M dont la valeur est égale à $\rho \cdot (1 + a.\cos n.\theta)$, lorsque ce dispositif est adressé par des valeurs d'adresse X et Y. Le dispositif 52' comporte six mémoires vives: 70, 71, 72, 73, 76, et 77; stockant les tables des fonctions: X$^2$, Y$^2$, - Log X, - Log Y, $\sqrt{X^2 + Y^2}$, et $\theta(\text{Log } \frac{Y}{X})$; une mémoire vive 80; trois additionneurs: 74, 75, et 82; un dispositif à retard 78; et trois multiplicateurs 79, 81 et 83. Les mémoires 70 et 72 reçoivent pour valeur d'adresse de lecture la valeur X. Les mémoires 71 et 73 reçoivent pour valeur d'adresse de lecture la valeur Y. Les mémoires 70 et 71 fournissent respectivement les valeurs $X^2$ et $Y^2$ qui sont ensuite additionnées par l'additionneur 74. Les mémoires 72 et 73 fournissent respectivement une valeur - Log X et une valeur Log Y qui sont additionnées ensuite par l'additionneur 75. La mémoire morte 76 reçoit pour valeur d'adresse de lecture la valeur $X^2 + Y^2$ fournie par la sortie de l'additionneur 74 et la mémoire morte 77 reçoit pour valeur d'adresse de lecture la valeur Log $\overset{\vee}{X}$ fournie par la sortie de l'additionneur 75. La sortie de la mémoire 76 fournit une valeur $\rho = \sqrt{X^2 + Y^2}$ au dispositif à retard 78 qui la retransmet à une première entrée du multiplicateur 83. La sortie de la mémoire 77 fournit une valeur $\theta = \text{Arctg } \overset{\vee}{X}$, correspondant à la valeur de Log $\overset{\vee}{X}$, à une première entrée du multiplicateur 79. Celui-ci reçoit une valeur entière n sur une seconde entrée, et fournit sur sa sortie une valeur $n\theta$. La valeur $n\theta$ constitue une adresse de lecture pour la mémoire vive 80. La mémoire vive 80 est dite mémoire de fonction de modulation car elle est chargée préalablement par les valeurs d'une fonction destinée à moduler la forme d'un cercle. Ces valeurs sont chargées par une entrée de données reliée à la sortie du registre 50. L'écriture et la lecture dans la mémoire 80 sont commandées respectivement par le signal $C'_{23}$ et le signal $C'_{24}$ fournis par les moyens de commande 21 comme dans le cas de la variante représentée sur la figure 18. Une sortie de données de la mémoire 80 fournit une valeur $\cos n\theta$ à une première entrée du multiplicateur 81 qui reçoit sur une seconde entrée une constante a. La constante a fixe l'amplitude de la modulation appliquée au cercle, alors que la constante n fixe le nombre des alternances visibles sur le cercle modulé. La sortie du multiplicateur 81 fournit une valeur $a.\cos n\theta$ à une première entrée de l'additionneur 82 qui reçoit sur une seconde entrée une valeur constante égale à l'unité. La sortie de l'additionneur 82 fournit donc une valeur $1 + a.\cos n\theta$ à la seconde entrée du multiplicateur 83. Ce dernier fournit à une entrée d'adresse de lecture de la mémoire de découpe 56 un mot binaire M dont la valeur est $\rho.(1 + a.\cos n\theta)$.

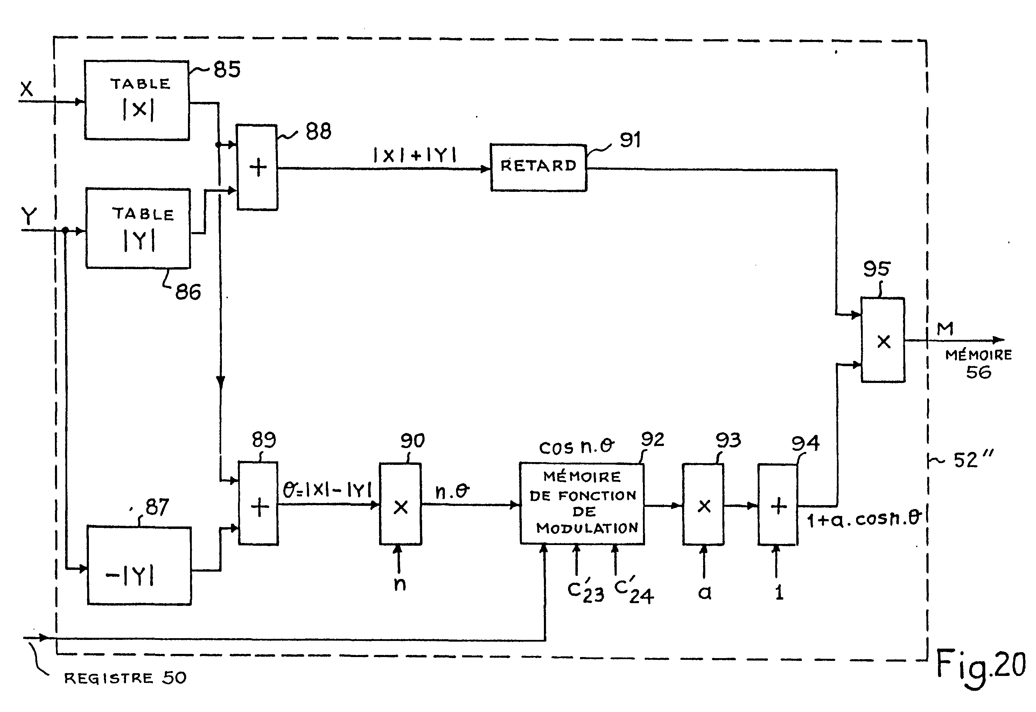

La figure 20 représente une troisième variante, 52'', du dispositif 52 de la figure 18, adaptée pour générer une figure obtenue par une modulation d'un carré. Dans cet exemple la figure est décrite par une équation de la forme:

$(|X| + |Y|).(1 + a \cos.n(|X| - |Y|)) = \text{constante}$

Le dispositif 52'' comporte trois mémoires vives 85, 86, et 87 stockant respectivement les tables des valeurs $|X|$, $|Y|$ et $-|Y|$; trois additionneurs: 88, 89 et 94; un dispositif à retard 91; trois multiplicateurs 90, 93, et 95; et une mémoire vive 92. La mémoire 85 reçoit pour valeur d'adresse de lecture la valeur X. Les mémoires 86 et 87 reçoivent pour valeur d'adresse de lecture la valeur Y. Les sorties de données de la mémoire 85 et de la mémoire 86 sont reliées respectivement à la première et à la seconde entrée de l'additionneur 88 qui fournit donc sur sa sortie une valeur $|X| + |Y|$. La sortie de la mémoire 87 est reliée à une première entrée de l'additionneur 89 dont une seconde entrée est reliée à la sortie de données de la mémoire 85. La sortie de l'additionneur 89 fournit donc une valeur $\theta = |X| - |Y|$. La valeur $\theta$ est appliquée à une première entrée du multiplicateur 90 qui reçoit sur une seconde entrée une valeur entière constante n qui détermine le nombre d'alternances modulant chaque côté du carré. La sortie du multiplicateur 90 fournit une valeur $n.\theta$ à une entrée d'adresse de lecture de la mémoire vive 92. La mémoire vive 92 est dite mémoire de fonction de modulation car elle stocke une table des valeurs de la fonction $\cos n\theta$ en fonction de $n\theta$. Ces valeurs sont chargées lors de l'initialisation pendant l'intervalle de suppression de trame par l'intermédiaire du registre 50, et sous la commande du signal de commande d'écriture $C'_{23}$. La valeur de $\cos n\theta$ est lue dans la mémoire 92 à l'adresse $n\theta$ sous l'action du signal de commande $C'_{24}$ puis est fournie à une première entrée du multiplicateur 93. Une seconde entrée du multiplicateur 93 reçoit une valeur constante a qui détermine l'amplitude de la modulation appliquée au carré. La sortie du multiplicateur 93 fournit une valeur $a.\cos n\theta$ à une première entrée de l'additionneur 94 qui reçoit sur une seconde entrée une valeur constante égale à l'unité. La sortie de l'additionneur 94 fournit une valeur $1 + a.\cos n\theta$ à une première entrée du multiplicateur 95. Une seconde entrée du multiplicateur 95 reçoit la valeur $|X| + |Y|$ retardée par le dispositif à retard 91 pour compenser les temps de calcul des multiplicateurs 90, 93, de la mémoire 92, et de l'additionneur 94. La sortie de l'additionneur 95 fournit un mot binaire M dont la valeur est égale à:

$(|X| + |Y|).(1 + a.\cos n(|X| - |Y|)).$

L'invention ne se limite pas aux exemples de réalisation décrits ci-dessus, il est notamment possible de réaliser des générateurs de formes électronique comportant plusieurs automates-points 6 réalisés selon les trois variantes décrites ci-dessus et ayant des sorties couplées par des comparateurs numériques permettant de combiner les signaux de commande destinés à commander les commutateurs à gain variable, pour obtenir deux signaux de commande commandant un commutateur à gain variable de façon à superposer dans une même image les figures générées par les différents automates-points du générateur de formes.

L'invention ne se limite pas, non plus aux figures représentables par des équations de la forme F(X) + G(Y) = constante, ou se déduisant d'un cercle ou d'un carré par une modulation, elle est applicable à toutes les figures stockables dans un dispositif de stockage dont les valeurs d'adresses sont constituées par les coordonnées des points d'une image initiale, dans un repère cartésien.

**Revendications**

1. Procédé pour réaliser une transformation géométrique sur une image vidéo, dite image initiale, consistant à:

- repérer chaque point de l'image initiale par des coordonnées (X, Y, 0) dans un repère cartésien, dit repère mobile, lié à cette image initiale;
- à représenter chaque point de l'image initiale par un mot binaire;
- à stocker l'image initiale dans un dispositif de stockage, ayant deux entrées d'adresses de lecture et une sortie de données, et fournissant un mot binaire correspondant au point de coordonnées (X, Y, 0) dans l'image initiale, lorsque des valeurs d'adresses de lecture, X et Y sont appliquées respectivement sur les deux entrées;
- à repérer chaque point de l'image transformée de l'image initiale, par des coordonnées $(X_3, Y_3, 0)$ dans un repère cartésien $(0X_3, 0Y_3, 0Z_3)$ lié à cette image transformée et dit repère fixe, l'unité sur chaque axe du repère fixe et du repère mobile correspondant à un élément d'image;
- à représenter chaque point de l'image transformée, par un mot binaire M fourni par le dispositif de stockage en appliquant à ses entrées d'adresses de lecture des valeurs de X et Y calculées en fonction des coordonnées $(X_3, Y_3, 0)$ de ce point et en fonction des paramètres de la transformation géométrique; celle-ci étant composée: d'une affinité dont les coefficients sont $(A_x, A_y)$; d'une rotation d'un agle $\alpha$, effectuées dans le plan de l'image initiale; d'une projection en perspective sur le plan de l'image transformée, projection dont la direction de vue fait un angle $\beta$ avec l'axe $0_3X_3$ et un agle $\gamma$ avec l'axe $0_3Z_3$ et dont le point de fuite est situé à une distance $\rho_{PF}$ de l'origine du repère fixe, cette origine étant le premier point de la première ligne de l'image transformée; et d'une translation $(X_{03}, Y_{03})$ dans le plan de l'image transformée;
caractérisé en ce que:
- pour chaque point de coordonnées $(X_3 \geqslant 0, Y_3 \geqslant 0,0)$ de l'image transformée les adresses de lecture sont calculées, en fonction de celles calculées pour le point immédiatement précédent dans l'image transformée, selon les formules:

$$X(X_3, Y_3) = X(X_3 - 1, Y_3) + k.D_{xx}$$
$$Y(X_3, Y_3) = Y(X_3 - 1, Y_3) + k.D_{yx} \tag{15}$$

- pour chaque point de coordonnées $(X_3 = 0, Y_3 > 0,0)$, situé au début d'une ligne de l'image transformée, les valeurs des adresses de lecture sont initialisées par les valeurs:

$$X(0, Y_3) = X(0, Y_3 - 1) + k.D_{xy}$$
$$Y(0, Y_3) = Y(0, Y_3 - 1) + k.D_{yy} \tag{16}$$

$X(0, Y_3 - 1)$, $Y(0, Y_3 - 1)$ étant les valeurs d'adresses de lecture calculées pour le premier point de 1 la ligne immédiatement précédente dans l'image transformée;
- pour le premier point de l'image transformée $(X_3 = 0, Y_3 = 0)$ les valeurs des adresses de lecture sont initialisées par les valeurs:

$$X(0, 0) = - k.D_{xx} . X_{03} - k.D_{xy}.Y_{03}$$
$$Y(0, 0) = - k.D_{yx} . X_{03} - k.D_{yy}.Y_{03} \tag{17}$$

avec:

$$\left. \begin{array}{l} k = 1 - k_x (X_3 - X_{03}) + k_y (Y_3 - Y_{03}) \\[6pt] D_{xx} = \frac{\cos \alpha \cos \beta \cos \gamma + \sin \alpha \sin \beta}{A_x} \\[6pt] D_{xy} = \frac{\cos \alpha \sin \beta \cos \gamma + \sin \alpha \cos \beta}{A_x} \\[6pt] D_{yx} = - \frac{\sin \alpha \cos \beta \cos \gamma + \cos \alpha \sin \beta}{A_y} \\[6pt] D_{yy} = \frac{-\sin \alpha \sin \beta \cos \gamma + \cos \alpha \cos \beta}{A_y} \\[6pt] k_x = \frac{\cos \beta \sin \gamma}{\rho_{PF}} \\[6pt] k_y = \frac{\sin \beta \cos \gamma}{\rho_{PF}} \end{array} \right\} \tag{18}$$

2. Procédé selon la revendication 1, où le point de fuite est supposé situé à l'infini, caractérisé en ce que k = 1.

3. Procédé selon la revendication 2, pour réaliser, en plus de la transformation géométrique un effet de multiplication de l'image initiale dans l'image transformée, caractérisé en ce qu'il consiste:
- à réinitialiser la valeur de (X, Y) périodiquement, selon les formules (16), au cours de chaque ligne de balayage de l'image transformée, la période étant un sous-multiple de la durée du balayage d'une ligne;
- à réinitialiser la valeur de (X, Y) périodiquement, selon les formules (17), au cours de chaque trame de

15

balayage de l'image transformée, la période étant supérieure à la durée d'une ligne, et étant un sous-multiple de la durée du balayage d'une trame.

4. Procédé selon la revendication 3, pour réaliser, en plus de la transformation géométrique et de l'effet de multiplication, un effet de miroir, caractérisé en ce qu'il consiste en outre:

- à inverser le signe de $D_{xx}$ et $D_{yx}$ lors de chaque réinitialisation de (X, Y) avec les valeurs données par la formule (16), pour obtenir des symétries par rapport à des axes verticaux;

- à inverser le signe de $D_{yy}$ et $D_{xy}$ lors de chaque réinitialisation de (X, Y) avec les valeurs données par les formules (17) pour obtenir des symétries par rapport à des axes horizontaux.

5. Dispositif mettant en oeuvre le procédé selon la revendication 1, pour réaliser une transformation géométrique sur une image vidéo, caractérisé en ce qu'il comporte:

- des moyens d'entrée (1) pour sélectionner les paramètres définissant une transformation géométrique;

- des premiers moyens de calcul (2 et 3) pour calculer selon les formules (17), à la fréquence des trames, des valeurs d'adresses (X(0, 0), Y(0, 0)) correspondant au premier point d'une trame d'une image transformée, et calculer en fonction des paramètres de la transformation des valeurs d'incréments $k.D_{xx}$, $k.D_{yy}$, $k.D_{xy}$, $k.D_{yx}$ selon les formules (18);

- des seconds moyens de calcul (16 à 20) pour calculer selon les formules (16), à la fréquence des lignes, des valeurs d'adresses $X(0, Y_3)$ et $Y(0, Y_3)$, correspondant au premier point d'une ligne de rang $Y_3$ d'une image transformée, en fonction des valeurs de X(0, 0), Y(0, 0), $k.D_{xy}$, et $k.D_{yx}$ fournies par les premiers moyens de calcul (2 et 3);

- des troisièmes moyens de calcul (30 à 37) pour calculer selon les formules (15), à la fréquence des points, des valeurs d'adresses X et Y en fonction des valeurs $X(0, Y_3)$, $Y(0, Y_3)$ et $k.D_{xx}$, $k.D_{yy}$ fournies respectivement par les seconds et premiers moyens de calcul (2, 3 et 16 à 20);

- un dispositif de stockage (38 ou 52, ou 52', ou 52") de l'image initiale, pour fournir un mot binaire M lorsque des valeurs d'adresses (X, Y) lui sont appliquées, ce mot binaire M permettant de générer un signal vidéo correspondant à un point de l'image transformée.

6. Dispositif selon la revendication 5, ou l'image vidéo initiale est une image quelconque, caractérisé en ce qu'il comporte en outre des compteurs (40, 41) pour générer, à la fréquence des points, des valeurs d'adresses d'écriture; et en ce que le dispositif de stockage est une mémoire (38), ayant une capacité égale à une image, alternativement inscrite a une adresse fournie par les compteurs (40, 41) et lue à une adresse (X, Y) fournie par les troisièmes moyens de calcul (30 à 37), à la fréquence des points, les données inscrites etant les valeurs d'un signal vidéo numérisé correspondant à une trame d'une image initiale, et les valeurs lues constituant les valeurs d'un signal vidéo correspondant à la transformée de l'autre trame de l'image initiale, par la transformation géométrique.

7. Dispositif selon la revendication 5, dit générateur de formes, générant des signaux de commande d'un commutateur vidéo à gain variable (57), caractérisé en ce que le dispositif de stockage (52 ou 52' ou 52") stocke des données définissant une figure géométrique.

## Patentansprüche

1. Verfahren zur Verwirklichung einer geometrischen Transformation an einem Videobild, das als Anfangsbild bezeichnet wird, darin bestehend, daß:

- jeder Punkt des Anfangsbildes durch Koordinaten (X, Y, 0) in einem kartesischen Bezugssystem, das als bewegliches Bezugssystem bezeichnet wird und mit diesem Anfangsbild verknüpft ist, definiert wird,;

- jeder Punkt des Anfangsbildes durch ein binäres Wort dargestellt wird;

- das Anfangsbild in einer Speichervorrichtung gespeichert wird, die zwei Lese-Adresseingänge und einen Datenausgang aufweist sowie ein binäres Wort, das dem Koordinatenpunkt (X, Y, 0) in dem Anfangsbild entspricht, liefert, wenn die Leseadresswerte X und Y an den einen bzw. anderen der beiden Eingänge angelegt werden;

- jeder Punkt des gegenüber dem Anfangsbild transformierten Bildes durch Koordinaten $(X_3, Y_3, 0)$ in einem kartesischen Bezugssystem $(0X_3, 0Y_3, 0Z_3)$ definiert wird, das mit diesem transformierten Bild verknüpft ist und als festes Bezugssystem bezeichnet wird, wobei die Einheit auf jeder Achse des festen Bezugssystems und des beweglichen Bezugssystems einem Bildelement entspricht;

- jeder Punkt des transformierten Bildes durch ein Binärwort M dargestellt wird, welches von der Speichervorrichtung geliefert wird, indem an ihre Lese-Adresseingänge Werte X und Y angelegt werden, die in Abhängigkeit von den Koordinaten $(X_3, Y_3, 0)$ dieses Punktes und in Abhängigkeit von den Parametern der geometrischen Transformation berechnet werden; wobei letztere zusammengesetzt ist aus: einer Affinität, deren Koeffizienten $(A_x, A_y)$ sind; einer Drehung um einen Winkel $\alpha$, ausgeführt in der Ebene des Anfangsbildes; einer perspektivischen Projektion auf die Ebene des transformierten Bildes, wobei die Blickrichtung dieser Projektion einen Winkel $\beta$ mit der Achse $0_3X_3$ und einen Winkel $\gamma$ mit der Achse $0_3Z_3$ bildet, während das Perspektivitätszentrum in einer Entfernung $\rho_{PF}$ vom Ursprung des festen Bezugssystems liegt und dieser Ursprung der erste Punkt der ersten Linie des transformierten Bildes ist; und aus einer Translation $(X_{03}, Y_{03})$ in der Ebene des transformierten Bildes;

dadurch gekennzeichnet, daß:

- für jeden Koordinatenpunkt ($X_3 \geqq 0$, $Y_3 \geqq 0$, 0) des transformierten Bildes die Leseadressen in Abhängigkeit von denen berechnet werden, welche für den unmittelbar vorausgehenden Punkt in dem transformierten Bild berechnet wurden, nach den Formeln:

$$X(X_3, Y_3) = X(X_3 - 1, Y_3) + k.D_{xx}$$

$$Y(X_3, Y_3) = Y(X_3 - 1, Y_3) + k.D_{yx} \tag{15}$$

- für jeden Koordinatenpunkt ($X_3 = 0$, $Y_3 > 0$, 0), der am Anfang einer Zeile des transformierten Bildes liegt, die Lese-Adresswerte initiiert werden mit den Werten:

$$X(0, Y_3) = X(0, Y_3 - 1) + k.D_{xy}$$

$$Y(0, Y_3) = Y(0, Y_3 - 1) + k.D_{yy} \tag{16}$$

worin $X(0, Y_3 - 1)$, $Y(0, Y_3 - 1)$ die Lese-Adresswerte sind, welche für den ersten Punkt der unmittelbar vorausgehenden Zeile in dem transformierten Bild berechnet wurden;

- für den ersten Punkt des transformierten Bildes ($X_3 = 0$, $Y_3 = 0$) die Lese-Adresswerte initiiert werden mit den Werten:

$$X(0, 0) = - k.D_{xx}. X_{03} - k.D_{xy} . Y_{03}$$

$$Y(0, 0) = - k.D_{yx}. X_{03} - k.D_{yy} . Y_{03} \tag{17}$$

mit:

$$\left. \begin{array}{l} k = 1 - k_x(X_3 - X_{03}) + k_y(Y_3 - Y_{03}) \\[2mm] D_{xx} = \dfrac{\cos \alpha \cos \beta \cos \gamma + \sin \alpha \sin \beta}{A_x} \\[2mm] D_{xy} = \dfrac{\cos \alpha \sin \beta \cos \gamma + \sin \alpha \cos \beta}{A_x} \\[2mm] D_{yx} = - \dfrac{\sin \alpha \cos \beta \cos \gamma + \cos \alpha \sin \beta}{A_y} \\[2mm] D_{yy} = \dfrac{-\sin \alpha \sin \beta \cos \gamma + \cos \alpha \cos \beta}{A_y} \\[2mm] k_x = \dfrac{\cos \beta \sin \gamma}{P_{PF}} \\[2mm] k_y = \dfrac{\sin \beta \cos \gamma}{P_{PF}} \end{array} \right] \tag{18}$$

2. Verfahren nach Anspruch 1, worin das Perspektivitätszentrum als im Unendlichen liegend angenommen wird, dadurch gekennzeichnet, daß $k = 1$.

3. Verfahren nach Anspruch 2, zur Durchführung eines Multiplikationseffektes des Anfangsbildes in dem transformierten Bild zusätzlich zu der geometrischen Transformation, dadurch gekennzeichnet, daß es darin besteht, daß:

- der Wert (X, Y) periodisch gemäß den Formeln (16) im Verlaufe jeder Ablenkzeile des transformierten Bildes reinitiiert wird, wobei die Periode ein gemeinsamer Teiler der Ablenkdauer für eine Zeile ist;

- der Wert (X, Y) periodisch entsprechend den Formeln (17) im Verlaufe jedes Ablenkrasterbildes des transformierten Bildes reinitiiert wird, wobei die Periode größer als die Dauer einer Zeile und ein gemeinsamer Teiler der Ablenkdauer für ein Rasterbild ist.

4. Verfahren nach Anspruch 3, zur Erzeugung eines Spiegeleffektes zusätzlich zu der geometrischen Transformation und der Multiplikation, dadurch gekennzeichnet, daß es darin besteht, daß ferner:

- das Vorzeichen von $D_{xx}$ und $D_{yx}$ bei jeder Reinitiierung von (X, Y) mit den durch die Formel (16) gegebenen Werten invertiert wird, um Symmetrien bezüglich vertikaler Achsen zu erhalten;

- das Vorzeichen von $D_{yy}$ und $D_{xy}$ bei jeder Reinitiierung von (X, Y) mit den durch die Formeln (17) gegebenen Werten invertiert wird, um Symmetrien bezüglich horizontaler Achsen zu erhalten.

5. Vorrichtung zur Durchführung des Verfahrens nach Anspruch 1, für die Verwirklichung einer geometrischen Transformation an einem Videobild, dadurch gekennzeichnet, daß sie enthält:

- Eingabemittel (1) zum Selektieren der eine geometrische Transformation definierenden Parameter;

- erste Rechenmittel (2 und 3), um nach den Formeln (17) und mit der Bildfrequenz die Adresswerte (X(0, 0), Y(0, 0)) zu berechnen, die dem ersten Punkt eines Bildrasters eines transformierten Bildes entsprechen, und um in Abhängigkeit von den Parametern der Transformation Inkrementwerte $k.D_{xx}$, $k.D_{yy}$, $k.D_{xy}$, $k.D_{yx}$ über die Formeln (18) zu berechnen;

- zweite Rechenmittel (16 bis 20), um über die Formeln (16) mit der Zeilenfrequenz Adresswerte $X(0, Y_3)$ und $Y(0, Y_3)$ zu berechnen, welche dem ersten Punkt der Zeile der Ordnung $Y_3$ eines transformierten Bildes

entsprechen, in Abhängigkeit von den Werten von X(0, 0), Y(0, 0), k.D$_{xy}$ und k.D$_{yx}$, die von den ersten Rechenmitteln (2 und 3) geliefert wurden;

- dritte Rechenmittel (30 bis 37), um über die Formeln (15) mit der Punktfrequenz Adresswerte X und Y in Abhängigkeit von den Werten X(0, Y$_3$), Y(0, Y$_3$) und k.D$_{xx}$, k.D$_{yy}$ zu berechnen, die von den ersten bzw. von den zweiten Rechenmitteln (2, 3 und 16 bis 20) geliefert werden;

- eine Speichervorrichtung (38 oder 52, 52' oder 52'') zur Speicherung des Anfangsbildes, um ein Binärwort M zu liefern, wenn Adresswerte (X, Y) daran angelegt werden, wobei dieses Binärwort M die Erzeugung eines Videosignals gestattet, das einem Punkt des transformierten Bildes entspricht.

6. Vorrichtung nach Anspruch 5, worin das Anfangs-Videobild ein beliebiges Bild ist, dadurch gekennzeichnet, daß sie ferner Zähler (40, 41) enthält, um mit der Punktfrequenz Schreib-Adresswerte zu erzeugen; und daß die Speichervorrichtung ein Speicher (38) ist, dessen Kapazität gleich einem Bild ist und worin abwechselnd mit der Punktfrequenz an einer von den Zählern (40, 41) gelieferten Adresse eingeschrieben und einer von den dritten Rechenmitteln (30 bis 37) gelieferten Adresse (X, Y) ausgelesen wird, wobei die eingeschriebenen Daten die Werte eines einem Bildraster eines Anfangsbildes entsprechenden digitalisierten Videosignals sind und die ausgelesenen Werte die Werte eines Videosignals bilden, das einer Transformation des anderen Bildrasters des Anfangsbildes mittels der geometrischen Transformation entspricht.

7. Vorrichtung nach Anspruch 5, die als Formengenerator bezeichnet wird und Steuersignale für einen Videokommutator mit veränderlicher Verstärkung (57) erzeugt, dadurch gekennzeichnet, daß die Speichervorrichtung (52 oder 52', 52'') Daten speichert, welche eine geometrische Figur definieren.

## Claims

1. Method of producing a geometric transformation of a video image referred to as an initial image, consisting in:

- defining each point of the initial image by coordinates (X, Y, 0) in a cartesian system, referred to as a movable system and related to this initial image;

- representing each point of the initial image by a binary word;

- storing the initial image in a storing device having two reading address inputs and a data output and supplying a binary word corresponding to the point having the coordinates (X, Y, 0) in the initial image when the reading address values X and Y are respectively applied on the two inputs;

- defining each point of the transformed image of the initial image by coordinate (X$_3$, Y$_3$, 0) in a cartesian system (0X$_3$, 0Y$_3$, 0Z$_3$) related to this transformed image and referred to as a fixed system, the unit on each axis of the fixed system and of the movable system corresponding to an image element;

- representing each point of the transformed image by a binary word M supplied by the storing device by applying to its reading address inputs the values of X and Y calculated as a function of the coordinates (X$_3$, Y$_3$, 0) of this point and as a function of the parameters of the geometric transformation; the latter being composed of: an affinity the coefficients of which are (A$_x$, A$_y$); a rotation by an angle $\alpha$, performed in the plane of the initial image; a perspective projection onto the plane of the transformed image, the visual direction of the projection forming an angle $\beta$ with the axis 0$_3$X$_3$ and an angle $\gamma$ with the axis 0$_3$Z$_3$, and the center of perspective being located at a distance $\rho_{PF}$ of the origin of the fixed system, this origin being the first point of the first line of the transformed image; and of a translation (X$_{03}$, Y$_{03}$) in the plane of the transformed image;

characterized in that:

- for each point having the coordinates (X$_3 \geqq 0$, Y$_3 \geqq 0$, 0) of the transformed image the reading addresses are calculated as a function of those calculated for the immediately preceding point in the transformed image, by the formulae:

$$X(X_3, Y_3) = X(X_3 - 1, Y_3) + k.D_{xx}$$

$$Y(X_3, Y_3) = Y(X_3 - 1, Y_3) + k.D_{yx} \tag{15}$$

- for each point having the coordinates (X$_3$ = 0, Y$_3 \geqq 0$, 0) lying at the beginning of a line of the transformed image the reading address values are initialized by the values:

$$X(0, Y_3) = X(0, Y_3 - 1) + k.D_{xy}$$

$$Y(0, Y_3) = Y(0, Y_3 - 1) + k.D_{yy} \tag{16}$$

X(0, Y$_3$ - 1), Y(0, Y$_3$ - 1) being the reading address values calculated for the first point of the immediately preceding line in the transformed image;

- for the first point of the transformed image (X$_3$ = 0, Y$_3$ = 0) the reading address values are initialized by the values:

$$X(0, 0) = - k.D_{xx}.X_{03} - k.D_{xy}.Y_{03}$$

$$Y(0, 0) = - k.D_{yx}.X_{03} - k.D_{yy}.Y_{03}$$

(17)

with:

$$k = 1 - k_x(X_3 - X_{03}) + k_y(Y_3 - Y_{03})$$

$$D_{xx} = \frac{\cos\alpha\cos\beta\cos\gamma + \sin\alpha\sin\beta}{A_x}$$

$$D_{xy} = \frac{\cos\alpha\sin\beta\cos\gamma + \sin\alpha\cos\beta}{A_x}$$

$$D_{yx} = - \frac{\sin\alpha\cos\beta\cos\gamma + \cos\alpha\sin\beta}{A_y}$$

(18)

$$D_{yy} = \frac{-\sin\alpha\sin\beta\cos\gamma + \cos\alpha\cos\beta}{A_y}$$

$$k_x = \frac{\cos\beta\sin\gamma}{\rho_{PF}}$$

$$k_y = \frac{\sin\beta\cos\gamma}{\rho_{PF}}$$

2. Method according to claim 1, wherein the center of perspective is supposed to be at infinity, characterized in that $k = 1$.

3. Method according to claim 2 for producing, in addition to the geometric transformation, a multiplication effect of the initial image in the transformed image, characterized in that it consists:.
- in reinitializing the value of (X, Y) periodically according to the formulae (16) during each deflection line of the transformed image, the period being a submultiple of the deflection duration of a line;
- in reinitializing the value of (X, Y) periodically according to the formulae (17) during each scanning frame of the transformed image, the period exceeding the duration of one line, and being a submultiple of the scanning duration of one frame.

4. Method according to claim 3, for producing a mirror effect in addition to the geometric transformation and the multiplication effect, characterized in that it further consists in:
- inverting the sign of $D_{xx}$ and $D_{yx}$ during each reinitialization of (X, Y) by the values indicated by formula (16) to obtain symmetries with respect to vertical axes;
- inverting the sign of $D_{yy}$ and $D_{yx}$ during each reinitialization of (X, Y) by the values indicated by the formulae (17) to obtain symmetries with respect to horizontal axes.

5. Device for performing the method according to claim 1, for producing a geometric transformation of a video image, characterized in that it comprises:
- input means (1) for selecting parameters defining a geometric transformation;
- first calculating means (2 and 3) for calculating according to formulae (17) and at the frame frequency the address values (X(0, 0), Y(0, 0)) corresponding to the first point of a frame of a transformed image, and calculating incremental values $k.D_{xx}$, $k.D_{yy}$, $k.D_{xy}$, $k.D_{yx}$ according to formulae (18) and as a function of the parameters of the transformation;
- second calculating means (16 to 20) for calculating according to formulae (16) and at the line frequency the address values $X(0, Y_3)$ and $Y(0, Y_3)$ corresponding to the first point of a line of order $Y_3$ of a transformed image as a function of the values of X(0, 0), Y(0, 0), $k.D_{xy}$ and $k.D_{yx}$ supplied by the first calculating means (2 and 3);
- third calculating means (30 to 37) for calculating according to formulae (15) and at the point frequency the address values X and Y as a function of the values $X(0, Y_3)$, $Y(0, Y_3)$ and $k.D_{xx}$, $k.D_{yy}$ respectively supplied by the second and first calculating means (2, 3 and 16 to 20);
- a storing device (38 or 52 or 52' or 52'') for storing the initial image to supply a binary word M when the address values (X, Y) are applied thereto, this binary word (M) permitting to generate a video signal corresponding to a point of the transformed image.

6. Device according to claim 5 wherein the initial video image is a random image, characterized in that it further comprises counters (40, 41) for generating writing address values at the point frequency; and in that the storing device is a memory (38) having a capacity equal to one image and wherein the writing at an address supplied by the counters (40, 41) and reading at an address (X, Y) supplied by the third calculating means (30 to 37) are alternatingly performed at the point frequency, the written data being the values of a digitalized video signal corresponding to a frame of an initial image, and the read values constituting the values of a video signal corresponding to the transform of the other frame of the initial image by means of the geometric transformation.

7. Device according to claim 5, referred to as a shape generator, generating control signals of a video switch having a variable gain (57), characterized in that the storing device (52 or 52' or 52'') stores data defining a geometric figure.

19

Fig.1

Fig.2

Fig.3

Fig.4

Fig.5

Fig.6

Fig.7

Fig.9

Fig.8

Fig.10

Fig.11

0 128 789

Fig.12

Fig.13

Fig.14

9

Fig. 15

Fig.16

Fig. 17

Fig. 18

0 128 789

Fig.19

**Fig.20**